(19) Europäisches Patentamt / European Patent Office / Office européen des brevets

(11) **EP 1 610 267 B1**

(12) **EUROPEAN PATENT SPECIFICATION**

(45) Date of publication and mention
of the grant of the patent:
**08.06.2011  Bulletin 2011/23**

(51) Int Cl.:
*G06T 3/40* $^{(2006.01)}$      *G06T 5/00* $^{(2006.01)}$

(21) Application number: **05019700.3**

(22) Date of filing: **15.04.2003**

(54) **Adaptive nonlinear image enlargement using wavelet transform coefficients**

Anpassungsfähige nichtlineare Bildvergrösserung mittels Wavelet-Transformkoeffizienten

Agrandissement d'image non-lineare adaptatif utilisant des coefficients de transformée d'ondelettes

(84) Designated Contracting States:
**DE FR GB**

(30) Priority: **16.04.2002  US 124290**

(43) Date of publication of application:
**28.12.2005  Bulletin 2005/52**

(62) Document number(s) of the earlier application(s) in
accordance with Art. 76 EPC:
**03008091.5 / 1 355 271**

(73) Proprietor: **Ricoh Company, Ltd.**
**Tokyo 143-8555 (JP)**

(72) Inventor: **Berkner, Kathrin**
**c/o Ricoh Innovations, Inc.**
**Suite 115**
**Menlo Park,CA 94025-7022 (US)**

(74) Representative: **Engelhard, Maximilian**
**Schwabe, Sandmair, Marx**
**Patentanwälte,**
**Stuntzstrasse 16**
**81677 München (DE)**

(56) References cited:
EP-A- 1 164 781      US-B1- 6 236 765
US-B1- 6 263 120

• REVATHY K ET AL: "IMAGE ZOOMING BY WAVELETS" FRACTALS, WORLD SCIENTIFIC PUBLISHING CO., SINGAPORE, SG, vol. 8, no. 3, September 2000 (2000-09), pages 247-253, XP000986588 ISSN: 0218-348X
• CAREY W.K., CHUANG D.B., HEMAMI S.S.: "Regularity-Preserving Image Interpretation" IEEE TRANSACTIONS ON IMAGE PROCESSING, vol. 8, no. 9, September 1999 (1999-09), pages 1293-1297, XP002246254
• REEVES T H ET AL: "Multiscale-based image enhancement" ELECTRICAL AND COMPUTER ENGINEERING, 1997. ENGINEERING INNOVATION: VOYAGE OF DISCOVERY. IEEE 1997 CANADIAN CONFERENCE ON ST. JOHNS, NFLD., CANADA 25-28 MAY 1997, NEW YORK, NY, USA,IEEE, US, 25 May 1997 (1997-05-25), pages 500-503, XP010235053 ISBN: 0-7803-3716-6
• CARRATO S ET AL: "A simple edge-sensitive image interpolation filter" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. 1, 16 September 1996 (1996-09-16), pages 711-714, XP010202493 ISBN: 0-7803-3259-8

**Description**

BACKGROUND OF THE INVENTION

1. Field of the Invention

The present invention relates to the field of image processing; more particularly, the present invention relates to edge preserving image interpolation with wavelets.

2. Description of the Related Art

Resizing of digital images is often performed in digital imaging processing and becomes more important in networks environments that include devices with different dpi resolution. While aliasing and moiré artifacts are the main problems in image reduction, enlargement of images has to deal with the problem of how to introduce high frequency components in order to have the image, in particular edges, not appear too smooth or too blurred. A typical method for enlargement of images is the use of an interpolation filter. This filtering incorporates information from neighboring pixels in order to predict an interpolation value. Commonly used filters as, e.g., in a popular photo-image manipulation application, are bilinear or bicubic interpolation filters. With the use of those filters a perfect step edge cannot be interpolated to produce a perfect step edge at a higher resolution. The interpolated edge will always look a bit blurred.

A standard method for image interpolation is polynomial interpolation. Depending on the degree of the interpolating polynomial (e.g., linear, quadratic, cubic, etc.), the image looks more or less smooth. The most commonly used technique is referred to as cubic interpolation. An advantage of polynomial methods is their simplicity since they are based on global linear filtering techniques. A disadvantage is that it is not possible to perform an adaptive interpolation, thereby resulting in edges typically being oversmoothed. This is a significant disadvantage in enlargement of documents.

Other interpolation filters exist, such as Keys filters, that are relatives of polynomial interpolation filters, but have characteristics of unsharp masking filters, i.e. they enhance high frequency content by creating a overshoot-undershoot at edges and an overshoot-undershoot is also created for noise pixel and leads to increase the noise level in the image. Since all these filters operate globally on the entire image, adaptive interpolation is not possible. A trade-off exists between enhancement of edges and suppressing noise in background areas.

Non-linear interpolation methods exist that operate in the pixel domain and extract edge information from the image and use that information to perform an edge-directed interpolation. One method first computes an edge map of the low resolution image using the Laplacian-of-Gaussian. In a second step, a preprocessing of the low resolution image using the edge information is performed to avoid errors in an estimated high resolution edge map. The third step performs interpolation using the edge information. In smooth areas, a bilinear interpolation is performed. Near edges, interpolated values are replaced by values that keep the sharpness of the edges. At last, an iterative correction step is performed to further improve the interpolation. A typical number of iterations is 10. See Allebach, J., and Wong, P.W., "Edge-directed interpolation," Proceedings of ICIP'98, pp. 707-710, 1998.

In another method, local covariance characteristics in the low resolution image are estimated and those estimates are used to perform classical Wiener filtering interpolation. Since local covariances are part of the filter coefficients, a smoothing along edges, but not across edges, is performed. A disadvantage of this method is that isolated dots are not well-preserved after interpolation since they are treated as very short edges. See Li, X., and Orchard, M., "new edge directed interpolation," Proceedings of ICIP' 2000, Vancouver, 2000.

Compared to the previous two methods, a very simple edge sensitive interpolation method is proposed in Carrato, S., Ramponi, G., and Marsi. S., "A simple edge-sensitive image interpolation filter," Proceedings of ICIP'96, pp. 711-714, 1996. This technique employs a nonlinear filter to determine the interpolating sample value. In detail, for a one-dimensional signal a local linear interpolation,

$$x_{int} = \mu_k x_k + (1 - \mu_k) x_{k+1} \qquad\qquad (1)$$

is performed. If $x_{int}$ is close to 0, the interpolating value is similar to the sample to the right, whereas if $x_{int}$ is close to 1, the interpolating value is similar to the sample to the left. This placement depends on the smoothness of the low resolution signal in a neighborhood of the interpolating value and is computed via the nonlinearity

$$\mu_k = \frac{k(x_{k+1} - x_{k+2}) - 1}{k\left((x_{k-1} - x_k)^2 + (x_{k+1} - x_{k+2})^2\right) + 2} \qquad (2)$$

where k is a parameter that controls the edge sensitivity. For k=0, linear interpolation is obtained, while positive values of k cause increased edge sensitivity. An advantage of this nonlinear technique is its simplicity-no iterations are necessary. A disadvantage of this technique is that the parameter k must be tuned and that isolated short edges do not get enlarged and look a bit "squeezed" in the interpolated image. Furthermore, the interpolation of a perfect step edge, e.g. , $x_{k-1}=x_k=1$, $x_{k+1}=x_{k+2}=0$, is not a perfect step edge anymore: 1, 1, 1, 1/2, 0, 0, 0. A linear interpolation is performed.

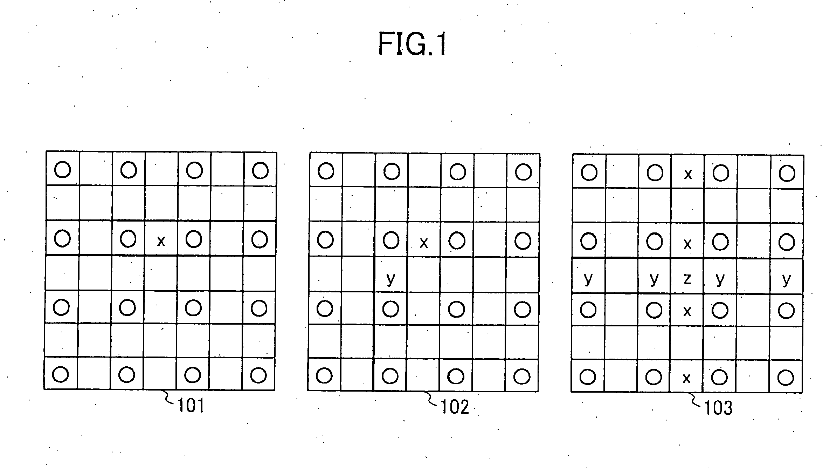

Figure 1 is a schematic diagram illustrating a two-dimensional extension of one-dimensional nonlinear interpolation methods. The pixel locations containing. "o" in Figure 1 are representative of pixels of the low resolution image. An extension to two dimensions is performed by applying the one-dimensional method separately to rows and columns of the low resolution image $I_{low}$, shown in matrix 101, with the results combined into $I_{comb}$, shown in matrix 102. The missing values are interpolated as averages of interpolation on rows and columns in the combined image $I_{int}$, shown in matrix 103.

Several techniques exist that explore multiresolution structures of images in the wavelet domain to extrapolate images. A general approach to edge preserving image interpolation with wavelets is to add an additional high frequency band to the wavelet decomposition of the low resolution image. Some prior art techniques determine the location of an edge by extrapolating extrema of wavelet coefficients across scales, or decomposition levels. This extrapolation typically requires a localization and a least-square fit of the extremes. A problem with those approaches is that the alignment of an edge is never sufficient. For extrapolating smoother images, it is less significant, but rather severe for extrapolation of text. One way to overcome this problem includes iterating on the extrapolation in order to better map the downsampled high resolution image to the original low resolution image. For more information, see Carey, W.K., Chuang, D.B., and Hemami, S.S., "Regularity-Preserving Image Interpolation," Trans. Image Processing, vol. 8, no. 9, pp. 1293-1297, 1999 and Chang, S.G., Cvetkovic, Z., and Vetterli, M., "Resolution enhancement of images using wavelet transform extrema extrapolation," Proceedings of ICASSP'95, pp. 2379-2382, 1995.

In U.S. Patent No. 5,717,789, entitled, "Image enhancement by non-linear extrapolation in frequency space,", issued February.1998, the Laplacian Pyramid is used to perform a modified unsharp masking on a smoothly interpolated image. In this case, it is difficult to align a perfect edge appropriately in the interpolated image.

## SUMMARY OF THE INVENTION

A method and apparatus for enlargement and resolution enhancement of images in the wavelet domain is described, as set out in the appended claims.

## BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.

Figure 1 illustrates two-dimensional extension of one-dimensional nonlinear interpolation methods;

Figure 2 is a flow diagram illustrating the process for embedding interpolation within an inverse wavelet transform;

Figures 3A, 3B, and 3C are flow diagrams illustrating one embodiment of a process for embedding interpolation within an inverse wavelet transform;

Figure 4 is a schematic diagram illustrating an apparatus to perform interpolation embedded within an inverse wavelet transform according to one embodiment;

Figure 5 is a schematic diagram illustrating an example of adaptive nonlinear image enlargement using wavelet transform coefficients compared with standard bicubic interpolation;

Figure 6 is a flow diagram illustrating one embodiment of a process for interpolating a step edge;

Figure 7 illustrates a digital copier having a wavelet-based enhancement system;

Figure 8 illustrates a process performed for high resolution printing;

Figure 9 is a block diagram of one embodiment of a computer system.

Figure 10 illustrates one embodiment of a method for processing image data;

Figure 11 illustrates another embodiment of the process for processing image data;

Figure 12 is a block diagram of filter bank implementation of the first level of multiscale unsharp masking with a discrete wavelet transform;

Figure 13 illustrates another block diagram of a filtering implementation of the first level of multiscale unsharp masking with an overcomplete discrete wavelet transform;

Figure 14 is a flow chart of one embodiment of the process for performing multi-scale sharpening and smoothing with wavelets;

Figures 15A-15D illustrate forward and reverse transforms;

Figures 16A-16D illustrate the application of sharpening/smoothing to RDWTs; and

Figure 17 is a block diagram of one embodiment of a copier.

## DETAILED DESCRIPTION OF THE INVENTION

A method and apparatus for adaptive nonlinear image enlargement using wavelet transform coefficients is described. Wavelet transform coefficient naturally divides the image into smooth and edge parts. The present invention performs interpolation in the wavelet domain and uses the information in lowpass and highpass coefficients to automatically perform a smooth interpolation in smooth regions and to predict sharp edges in areas of high frequency.

The technique described herein is a modified approach to the idea of nonlinear adaptive interpolation by performing adaptive interpolation in the wavelet domain. In one embodiment, this preserves significant sharp edges that are above the noise.level (characterized by, for example, a standard deviation σ of wavelet coefficients as described below), where edges can be isolated, including short edges, and does not enhance noise pixels. An edge sensitivity parameter k is eliminated from the prior art technique described above and a parameter p that determines the metric distances are measured in is utilized. Moreover, the technique may adapt the algorithm to arbitrary wavelet systems and transforms. In one embodiment, the technique is combined with wavelet-based denoising and enhancement techniques, and is therefore a useful addition to.a wavelet sharpening and smoothing ("WSS") technique. It is also applicable to JPEG 2000 (J2K) compressed images.

In the following description, numerous details are set forth, such as distances between components, types of molding, etc. It will be apparent, however, to one skilled in the art, that the present invention may be practiced without these specific details. In other instances, well-known structures and devices are shown in block diagram form, rather than in detail, in order to avoid obscuring the present invention.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

Wavelet-based Algorithm

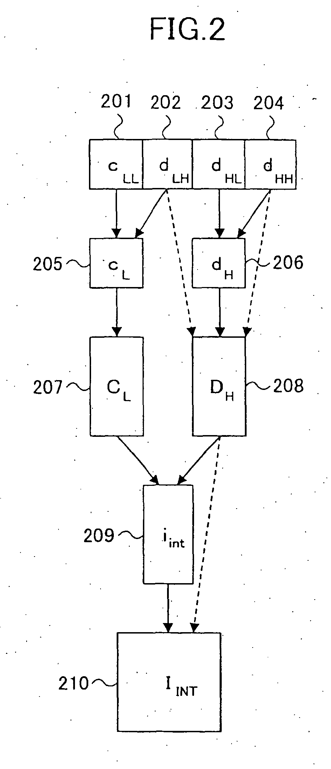

Figure 2 is a flow diagram of one embodiment of a process for performing non-linear image enlargement using wavelet transform coefficients. In one embodiment, the process is performed by processing logic that may comprise hardware (e.g., circuitry, dedicated logic, etc.), software (such as is run on a general purpose computer system or dedicated machine), or a combination of both.

In one embodiment, the process includes embedding interpolation within an inverse wavelet transform. The differences between samples in Eq. (2) above are interpreted in one embodiment as Haar wavelet coefficients. In such a case, the image is assumed to be given in redundant Haar wavelet coefficients. The first level of decomposition is given by lowpass coefficient $c_{LL}(j, i)$ 201 and detail coefficients $d_{LH}(j,i)$ 202, $d_{HL}(j,i)$ 203 and $d_{HH}(j,i)$ 204. The order of the forward transform is the horizontal transform is performed first followed by the vertical transform. In JPEG 2000, the order is reversed: first the vertical transform is applied followed by application of the horizontal transform. See JPEG2000: ITU-T Rec. T.800-ISO/IEC 15444-1:2000, Information Technology - JPEG2000 Image Coding System. In this case, the inverse transform performs the horizontal transform is applied followed by the vertical transform.

Processing logic performs a vertical inverse wavelet transform on columns of $c_{LL}$ 201 and $d_{LH}$ 202, with the results being referred to as $c_L$ 205.

Next, processing logic performs a vertical inverse wavelet transform on columns of $d_{HL}$ 203 and $d_{HH}$ 204 with the result being referred to as $d_H$ 206.

Processing logic places the results $c_L$ 205 and $d_H$ 206 on coarse grid images $C_L$ 207 and $D_H$ 208, so that $C_L(2j,i) = c_L(j,i)$, and $D_H(2j,i) = d_H(j,i)$.

Then, processing logic interpolates columns $C_L(2j+1, i)$ and $D_H(2j+1, i)$ according to

$$C_L(2j+1,i) = \mu_{j,i}C_L(2j,i) + (1-\mu_{j,i})C_L(2j+2,i) \quad \text{and} \tag{3}$$

$$D_H(2j+1,i) = \mu_{j,i}D_H(2j,i) + (1-\mu_{j,i})D_H(2j+2,i), \quad \text{where} \tag{4}$$

$$\mu_{j,i} = \frac{\left|d_{LH+HH}(j+1,i)\right|^p}{\left|d_{LH+HH}(j-1,i)\right|^p + \left|d_{LH+HH}(j+1,i)\right|^p} \tag{5}$$

$$\text{if } \left|d_{LH+HH}(j,i)\right| > \varepsilon, \left|d_{LH+HH}(j-1,i)\right|^p + \left|d_{LH+HH}(j+1,i)\right|^p \neq 0 \tag{6}$$

$$\text{and } d_{LH+HH}(j-1,i) \cdot d_{LH+HH}(j+1,i) \geq 0, \tag{7}$$

$\varepsilon$ is the measure of the noise level (e.g., standard deviation of coefficients, median, standard deviation or median of absolute values of coefficients in one region (e.g., one particular band of coefficients at particular levels), standard deviation or median of absolute values of coefficients of the same level at each level, standard deviation or median of absolute values of coefficients of different bands at a first level, standard deviation or median of absolute values of coefficients of different bands at each level, etc.) or is manually set. In one embodiment, the noise level may be characterized by the standard deviation $\sigma$ of wavelet coefficients. In such a case, the threshold indication of the noise level is:

$$\sigma\sqrt{2\log N}$$

for N samples.

Equation (5) is a modified version of Eq. (2) above where the parameter k is eliminated. If the wavelet coefficient to the right is large compared to the one on the left side the interpolating value is placed more to the left side, and vice versa. The parameter p controls whether differences between coefficients are weighted more heavily or less. A good choice for images is p=1. If $|d_{LH+H}(i,j)|>\varepsilon$ and ( $|d_{LH+HH}(j-1,i)|^p+|d_{LH+HH}(j+1,i)|^p = 0$ or $d_{LH+HH}(j-1,i)\cdot d_{LH+HH}(j+1,i)< 0$) then $\mu_{j,i}$ is set to 1; otherwise, i.e.,

$$\text{if} \left| d_{LH+HH}\left(j,i\right)\right| \leq \varepsilon, \mu_{j,i} \text{ is set to } 0.5. \qquad (8)$$

Processing logic then performs horizontal inverse wavelet transforms on rows of $c_L$ 207 and $d_H$ 208. The result is referred to as $i_{int}$ 209. Processing logic places these samples on a coarse grid image $I_{INT}$ 210 by $I_{INT}$ (j, 2i) = $i_{int}$ (j,i).

Processing logic then interpolates rows $I_{INT}$ (j,2i+1) by

$$I_{INT}\left(2j,2i+1\right)= v_{2j,i}I_{INT}\left(2j,2i\right)+\left(1-v_{2j,i}\right)I_{INT}\left(2j,2i+2\right), \qquad (9)$$

$$I_{INT}\left(2j+1,2i+1\right)= v_{2j,i}I_{INT}\left(2j+1,2i\right)+\left(1-v_{2j,i}\right)I_{INT}\left(2j+1,2i+2\right), \qquad (10)$$

where

$$v_{2j,i} = \frac{\left|D_{H}\left(2j,i+1\right)\right|^{p}}{\left|D_{H}\left(2j,i-1\right)\right|^{p}+\left|D_{H}\left(2j,i+1\right)\right|^{p}} \qquad (11)$$

if

$$\left|D_{H}\left(2j,i\right)\right| > \varepsilon, \left|D_{H}\left(2j,i-1\right)\right|^{p}+\left|D_{H}\left(2j,i+1\right)\right|^{p} \neq 0 \qquad (12)$$

and

$$D_{H}\left(2j,i-1\right)\cdot D_{H}\left(2j,i+1\right)\geq 0 \qquad (13)$$

$$D_{H}\left(2j,i-1\right)\cdot D_{H}\left(2j,i+1\right)< 0$$

In one embodiment, if $|D_H(2j,i)|>\varepsilon$ and ($|D_H(2j,i-1)|^p+|D_H(2j,i+1)|^p=0$ or $D_H (2j,i-1)\cdot D_H(2j,1+1)0$), then $v_{2j,i}$ is set to 1; otherwise, i.e., if $|D_H(2j,i)|\leq\varepsilon$, then $v_{2j,i}$ is set to 0.5.

In one embodiment, processing logic clips the image $I_{INT}$ back to the range of values for its palette. For example, in one embodiment in which the image is a 256 shade grayscale image, the range is clipped back to the range [0 255].

In equations (6) and (12) above, there is a condition |coefficient|>$\varepsilon$. An alternative to setting the threshold $\varepsilon$ can be to use a classifier result that classifies coefficients into classes A and B, and perform operations based on whether, for example, a coefficient is in class A. This could be used, e.g., in halftone areas. If a halftone classifier is used that decides whether a coefficient belongs to halftone area or not, the equations could be written as:

$$\text{If} \left| d_{LH+HL}\left(j,k\right)\right|$$

is halftone,

$$\left|\ d_{LH+HL}(j-1,i)\ v\right|^{P}+\left|\ d_{LH+HL}(j+1,i)\ \right|^{P}\neq 0$$

and

$$d_{LH+HH}(j-1,i)\cdot d_{LH+HH}(j+1,i)\geq 0$$

In general it could be written as
if $d_{LH+HL}(j,k)$ satisfies condition A,

$$\left|\ d_{LH+HL}(j-1,i)\ \right|^{P}+\left|\ d_{LH+HL}(j+1,i)\ \right|^{P}\neq 0$$

$$D_H(2j,i-1)\cdot D_H(2j,i+1)\geq 0$$

For example, condition A can be

1) |coefficient|>threshold, when threshold represent noise level in the image,
2) coefficient belongs to halftone area, when classifier for halftone vs. non-halftone is used,
3) coefficient belongs to text, when classifier for text vs. non-text is used, or when MRC (Mixed Raster Content) compression scheme is used, or
4) coefficient belongs to region-of-interest or to a specific layer in JPEG2000.

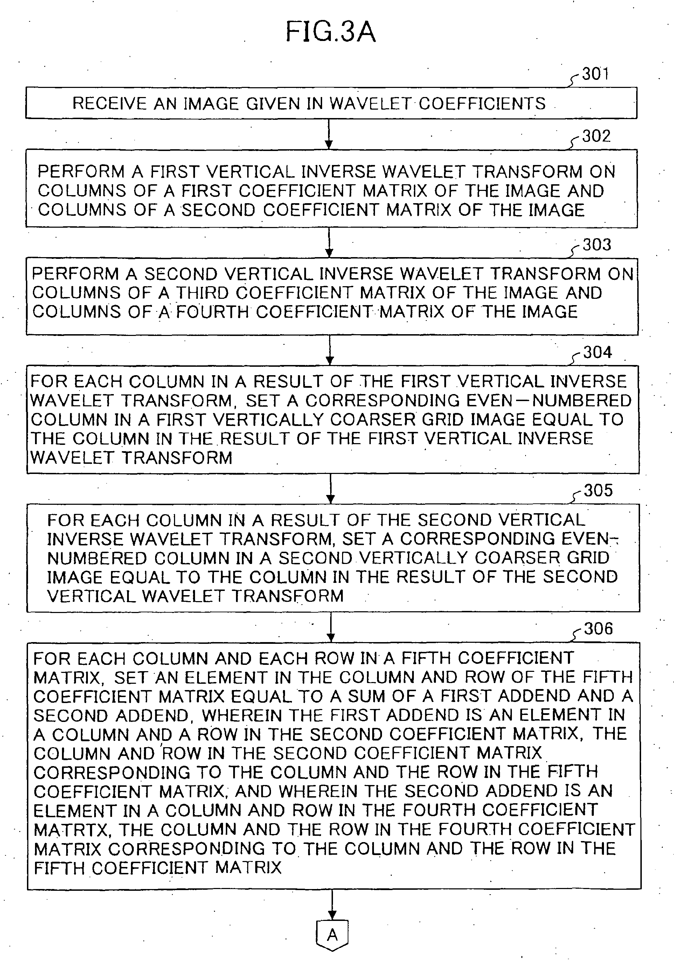

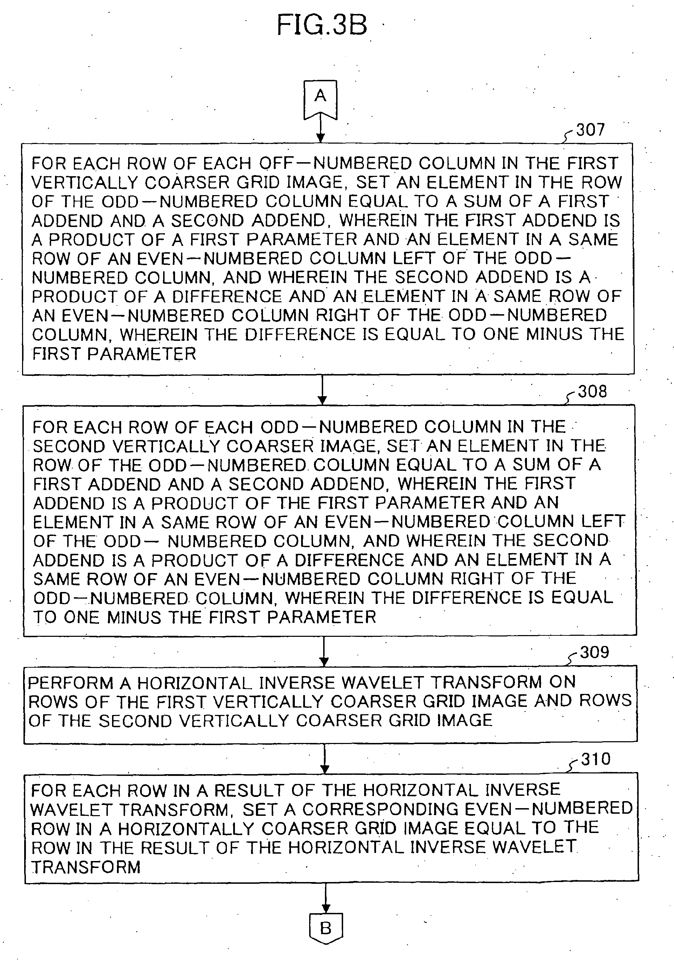

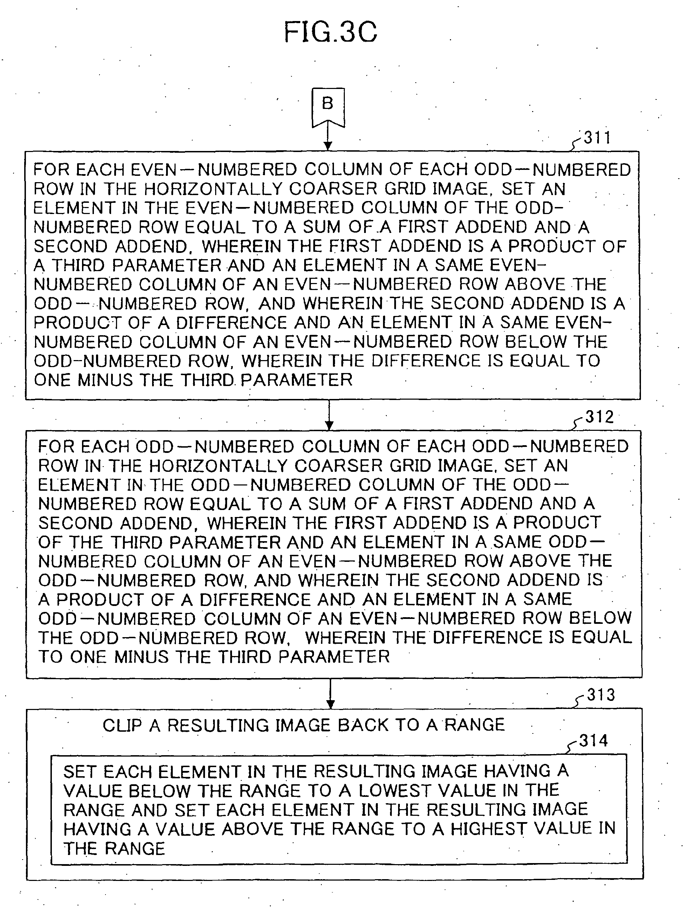

The above process is expressed in different terms below. Figures 3A, 3B, and 3C are flow diagrams illustrating embedding an interpolation technique into an inverse wavelet transform.

Referring to Figures 3A, 3B, and 3C, in one embodiment, processing logic receives an image given in wavelet coefficients (processing block 301). In process block 302, processing logic performs a first vertical inverse wavelet transform on columns (j) of a first coefficient matrix of the image (e.g., $c_{LL}$ (j,i)) and columns (j) of a second coefficient matrix of the image (e.g., $d_{LH}$ (j,i)). Then, in process block 303, processing logic performs a second vertical inverse wavelet transform on columns (j) of a third coefficient matrix of the image (e.g., $d_{HL}$ (j,i)) and columns (j) of a fourth coefficient matrix of the image (e.g., $d_{HH}$ (j,i)).

Next, in process block 304, for each column (j) in a result of the first vertical inverse wavelet transform (e.g., $c_L$ (j,i)), processing logic sets a corresponding even-numbered column (2j) in a first vertically coarser grid image (e.g., $C_L$ (2j,i)) equal to the column (j) in the result of the first vertical inverse wavelet transform (e.g., $C_L(2j,i) = c_L(j,i)$).

Then, in process block 305, for each column (j) in a result of the second vertical inverse wavelet transform (e.g., $d_H(j,i)$), processing logic sets a corresponding even-numbered column (2j) in a second vertically coarser grid image (e.g., $D_H(2j,i)$) equal to the column in the result of the second vertical inverse wavelet transform (e.g., $D_H(2j,i) = d_H(j,i)$).

Next, in process block 306, for each column (j) and each row (i) in a fifth coefficient matrix (e.g., $d_{LH+HH}(j,i)$), processing logic sets an element in the column (j) and row (i) of the fifth coefficient matrix equal to a sum of a first addend and a second addend (e.g., $d_{LH+HH}$ (j,i) = [$d_{LH}(j,i)$] + [$d_{HH}(j,i)$] = x + y). The first addend (x) is an element in a column and a row in the second coefficient matrix (e.g., $x = d_{LH}$ (j,i)). The column (j) and the row (i) in the second coefficient matrix (e.g., $d_{LH}(j,i)$) correspond to the column (j) and the row (i) in the fifth coefficient matrix (e.g., $d_{LH+HH}$ (j,i)). The second addend (y) is an element in a column and a row in the fourth coefficient matrix (e.g., $y = d_{HH}$ (j,i)). The column (j) and the row (i) in the fourth coefficient matrix (e.g., $d_{HH}$ (j,i)) correspond to the column (j) and the row (i) in the fifth coefficient matrix (e.g., $d_{LH+HH}$ (j,i)).

Then, in process block 307, for each row (i) of each odd-numbered column (2j+1) in the first vertically coarser grid image (e.g., $C_L(2j+1,i)$), processing logic sets an element in the row of the odd-numbered column equal to a sum of a first addend and a second addend (e.g., $C_L(2j+1,i) = [\mu_{j,i}C_L(2j,i)]g + [(1-\mu_{j,i})C_L(2j+2,i)] = x + y$). The first addend (x) is a product of a first parameter ($\mu_{j,i}$) and an element in a same row (i) of an even-numbered column to the left of the odd-numbered column (e.g. $x = [\mu_{j,i}][C_L(2j,i)]$). The second addend (y) is a product of a difference (z) and an element

7

in a same row (i) of an even-numbered column to the right of the odd-numbered column (e.g., $y = [(1-\mu_{j,i})] [C_L (2j+2,i)] = [z][C_L(2j+2,i)]$). The difference (z) is equal to one minus the first parameter (e.g. $z = 1 - \mu_{j,i}$).

Next, in process block 308, for each row (i) of each odd-numbered column (2j+1) in the second vertically coarser grid image (e.g., $D_H(2j+1, i)$), processing logic sets an element in the row of the odd-numbered column equal to a sum of a first addend and a second addend (e.g., $D_H (2j+1, i) = [\mu_{j,i} D_H(2j,i)] + [(1-\mu_{j,i}) D_H (2j+2, i)] = x + y$). The first addend (x) is a product of the first parameter ($\mu_{j,i}$) and an element in a same row (i) of an even-numbered column to the left of the odd-numbered column (e.g. $x = [\mu_{j,i}][D_H(2j,i)]$). The second addend (y) is a product of a difference (z) and an element in a same row (i) of an even-numbered column to the right of the odd-numbered column (e.g. $y = [z] [D_H(2j+2,i)]$). The difference (z) is equal to one minus the first parameter (e.g. $z = 1 - \mu_{j,i}$).

Then, in process block 309; processing logic performs a horizontal inverse wavelet transform on rows (i) of the first vertically coarser grid image (e.g., $C_L(j,i)$) and rows (i) of the second vertically coarser grid image (e.g., $D_H(j,i)$).

Next, in process block 310, for each row (i) in a result of the horizontal inverse wavelet transform (e.g., $i_{int}(j,i)$), processing logic sets a corresponding even-numbered row (2i) in a horizontally coarser grid image (e.g., $I_{INT}(j,2i)$) equal to the row in the result of the horizontal inverse wavelet transform (e.g., $I_{INT} (j,2i) = i_{int} (j,i)$).

Then, in process block 311, for each even-numbered column (2j) of each odd-numbered row (2i+1) in the horizontally coarser grid image (e.g., $I_{INT}(2j, 2i+1)$), processing logic sets an element i.n the even-numbered column of the odd-numbered row equal to a sum of a first addend and a second addend (e.g., $I_{INT}(2j, 2i+1) = v_{2j,i}I_{INT}(2j,2i) + [(1-v_{2j,i})I_{INT}(2j,2i+2)] = x + y$). The first addend (x) is a product of a third parameter ($v_{2j,i}$) and an element in a same even-numbered column (2j) of an even-numbered row above the odd-numbered row (e.g. $x = [v_{2j,i}][I_{INT}(2j, 2i)]$). The second addend (y) is a product of a difference (z) and an element in a same even-numbered column (2j) of an even-numbered row below the odd-numbered row (e.g., $y = [z][I_{INT}(2j, 2i+2)]$). The difference (z) is equal to one minus the third parameter (e.g., $z = 1 - v_{2j,i}$).

Finally, in process block 312, for each odd-numbered column (2j+1) of each odd-numbered row (2i+1) in the horizontally coarser grid image (e.g., $I_{INT} (2j+1, 2i+1)$), processing logic sets an element in the odd-numbered column of the odd-numbered row equal to a sum of a first addend and a second addend (e.g., $I_{INT}(2j+1, 2i+1) = v_{2j,i} I_{INT}(2j+1, 2i)] + [(1-V_{2j,i}) I_{INT}(2j+1, 2i+2)] = x + y$). The first addend (x) is a product of the third parameter ($v_{2j, i}$) and an element in a same odd-numbered column (2j+1) of an even-numbered row above the odd-numbered row (e.g. $x = [v_{2j, i}] [I_{INT}(2j+1, 2i)]$). The second addend (y) is a product of a difference (z) and an element in a same odd-numbered column (2j+1) of an even-numbered row below the odd-numbered row (e.g., $y = [z][I_{INT} (2j+1, 2i+2)]$). The difference (z) is equal to one minus the third parameter (e.g., $z = 1 - v_{2j,i}$).

In one embodiment, processing logic clips the resulting image back to a range, shown in process block 313. Process block 314 illustrates one embodiment of the clipping in which each element in the resulting image having a value below the range being set to a lowest value in the range and each element in the resulting image having a value above the range being set to a highest value in the range. Thus, in one embodiment, the range is a range of 256 shades of gray. In another embodiment, the range is a range of a greater number of shades of gray; for example, 65,536 shades. In yet another embodiment, the image is a color image having three ranges for hues of red, green, and blue, respectively. Each of these ranges is similarly clipped. Thus, the desired image palette is maintained throughout the interpolation.

In one embodiment, the wavelet coefficients are redundant Haar wavelet coefficients.

In one embodiment, the first parameter ($\mu_{j,i}$) and the third parameter ($v_{2j,i}$) are set to 0.5.

In one embodiment, if a condition (k') is satisfied, the first parameter ($\mu_{j,i}$) is a numerator divided by a denominator (e.g., $\mu_{j,i} = [|d_{LH+HH}(j+1, i)|^p] / [|d_{LH+HH}(j-1,i)|^p+|d_{LH+HH} (j+1, i)|^p] = x/y$). The numerator (x) is a first absolute value ($|x'|$) exponentially raised to a power of a second parameter (e.g., $x = [|d_{LH+HH}(j+1, i)|]^{[p]} = |x'|^p$). The first absolute value ($|x'|$) is an absolute value of a first element (x'). The first element (x') is an element in a column (j+1) and row (i) in the fifth coefficient matrix (e.g., $x' = d_{LH+HH}(j+1, i)$). The column (j+1) in the fifth coefficient matrix is a column right of a column (j) in the fifth coefficient matrix that corresponds to an even-numbered column (2j) left of the odd-numbered column (2j+1) in the first vertically coarser grid image (and also the odd-numbered column (2j+1) in the second vertically coarser grid image). The row (i) in the fifth coefficient matrix corresponds to the row (i) of the odd-numbered column in the first vertically coarser grid image (and also the row (i) of the odd-numbered column in the second vertically coarser grid image). The denominator (y) is a sum of an addend (z) and the numerator (e.g., $y = [|d_{LH+HH}(j-1,i)|^p] + [|d_{LH+HH}(j+1, i)|^p] = z + x$). The addend (z) is a second absolute value ($|z'|$) exponentially raised to the power of the second parameter (e.g., $z = [|d_{LH+HH}(j-1,i)|]^{[p]} = |z'|^p$). The second absolute value ($|z'|$) is an absolute value of a second element (z'). The second element (z') is an element in a column (j-1) and row (i) in the fifth coefficient matrix (e,g., $z' = d_{LH+HH}(j-1,i)$). The column (j-1) in the fifth coefficient matrix is a column left of a column (j) in the fifth coefficient matrix that corresponds to an even-numbered column (2j) left of the odd-numbered column (2j+1) in the first vertically coarser grid image (and also the odd-numbered column (2j+1) in the second vertically coarser grid image). The row (i) in the fifth coefficient matrix corresponds to the row (i) of the odd-numbered column in the first vertically coarser grid image (and also the row (i) of the odd-numbered column in the second vertically coarser grid image).

In one embodiment, the second parameter (p) is equal to one.

In one embodiment, the condition (k') is satisfied if an absolute value is greater than a threshold (e.g., $|d_{LH+HH}(j,i)| > \varepsilon$) and the denominator is not equal to zero (e.g., $|d_{LH+HH}(j-1,i)|^p + |d_{LH+HH}(j+1,i)|^p \neq 0$) and a product is not less than zero (e.g., $[d_{LH+HH}(j-1,i)][d_{LH+HH}(j+1,i)] \geq 0$). The absolute value is an absolute value of a third element. The third element is an element in a column (j) and row (i) in the fifth coefficient matrix (e.g., $d_{LH+HH}(j,i)$). The column (j) in the fifth coefficient matrix corresponds to an even-numbered column (2j) left of the odd-numbered column (2j+1) in the first vertically coarser grid image (and also the odd-numbered column (2j+1) in the second vertically coarser grid image). The row (i) in the fifth coefficient matrix corresponds to the row (i) of the odd-numbered column in the first vertically coarser grid image (and also the row (i) of the odd-numbered column in the second vertically coarser grid image). The product is a product of the first element and the second element (e.g., $[x'][z'] = [d_{LH+HH}(j+1,i)][d_{LH+HH}(j-1,i)]$).

In one embodiment, the first parameter ($\mu_{j,i}$) is set to one if the absolute value is greater than the threshold (e.g., $|d_{LH+HH}(j,i)| > \varepsilon$) and the denominator is equal to zero (e.g., $|d_{LH+HH}(j-1,i)|^p + |d_{LH+HH}(j+1,i)|^p = 0$).

In one embodiment, the first parameter ($\mu_{j,i}$) is set to one if the absolute value is greater than the threshold (e.g., $d_{LH+HH}(j,i) > \varepsilon$) and the product is less than zero (e.g., $[d_{LH+HH}(j-1,i)][d_{LH+HH}(j+1,i)] < 0$).

In one embodiment, if the condition (k') is satisfied, the third parameter ($v_{2j,i}$) is a numerator divided by a denominator (e.g., $v_{2j,i} = [|D_H(2j, i+1)|^p] / [|D_H(2j, i-1)|^p + |D_H(2j, i+1)|^p] = x / y$), where the condition k' is different than the parameter k mentioned above in the prior art. The numerator (x) is a first absolute value ($|x'|$) exponentially raised to a power of a second parameter (e.g., $x = [|D_H(2j,i+1)|]^{[p]} = |x'|^p$). The first absolute value ($|x'|$) is an absolute value of a first element (x'). The first element (x') is an element in a row (i+1) and even-numbered column (2j) in the second vertically coarser grid image (e..g., $x' = D_H(2j,i+1)$). The row (i+1) in the second vertically coarser grid image is a row below a row (i) in the second vertically coarser grid image that corresponds to an even-numbered row (2i) above the odd-numbered row (2i+1) in the horizontally coarser grid image. The even-numbered column (2j) in the second vertically coarser grid image corresponds to the even-numbered column (2j) of the odd-numbered row in the horizontally coarser grid image. The denominator (y) is a sum of an addend (z) and the numerator (e.g., $y = [|D_H(2j, i-1)|^p] + [|D_H(2j,i+1)|^p] = z + x$). The addend (z) is a second absolute value ($|z'|$) exponentially raised to the power of the second parameter (e.g., $z = [|D_H(2j,i-1)|]^{[p]} = |z'|^p$). The second absolute value ($|z'|$) is an absolute value of a second element (z'). The second element (z') is an element in a row (i-1) and even-numbered column (2j) in the second vertically coarser grid image (e.g., $z' = D_H(2j, i-1)$). The row (i-1) in the second vertically coarser grid image is a row above a row (i) in the second vertically coarser grid image that corresponds to an even-numbered row (2i) above the odd-numbered row (2i+1) in the horizontally coarser grid image. The even-numbered column (2j) in the second vertically coarser grid image corresponds to the even-numbered column (2j) of the odd-numbered row in the horizontally coarser grid image.

In one embodiment, the condition (k') is satisfied if an absolute value is greater than a threshold (e..g., $|D_H(2j, i)| > \varepsilon$) and the denominator is not equal to zero (e.g., $|D_H(2j,i-1)|^p + |D_H(2j,i+1)|^p \neq 0$) and a product is not less than zero (e.g., $[D_H(2j,i-1)][D_H(2j,i+1)] \geq 0$). The absolute value is an absolute value of a third element. The third element is an element in a row (i) and even-numbered column (2j) in the second vertically coarser grid image (e.g., $D_H(2j,i)$). The row (i) in the second vertically coarser grid image corresponds to an even-numbered row (2i) above the odd-numbered row (2i+1) in the horizontally coarser grid image. The even-numbered column (2j) in the second vertically coarser grid image corresponds to the even-numbered column (2j) of the odd-numbered row in the horizontally coarser grid image. The product is a product of the first element and the second element (e.g., $[x'][z'] = [D_H(2j,i-1)][D_H(2j,i+1)]$).

In one embodiment, the third parameter ($v_{2j,i}$) is set to one if the absolute value is greater than the threshold (e.g., $|D_H(2j,i)| > \varepsilon$) and the denominator is not equal to zero (e.g., $|D_H(2j,i-1)|^p + |D_H(2j,i+1)|^p \neq 0$).

In one embodiment, the third parameter ($v_{2j,i}$) is set to one if the absolute value is greater than the threshold (e.g., $|D_H(2j,i)| > \varepsilon$) and the product is not less than zero (e.g., $[D_H(2j,i-1)][D_H(2j,i+1)] \geq 0$).

The threshold ($\varepsilon$) may prevent noise pixels, including halftone noise pixels, from being treated as strong edges. In smooth regions where detail coefficients are zero, the interpolation may reduce to linear interpolation.

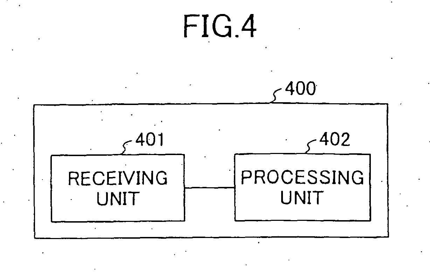

Figure 4 is a block diagram of one embodiment of an apparatus to perform interpolation embedded within an inverse wavelet transform. Referring to Figure 4, the apparatus 400 comprises a receiving unit 401 to receive an image given in wavelet coefficients and a processing unit 402 coupled with the receiving unit 401. The processing unit 402 performs the functionality described above. In one embodiment, the apparatus shown in Figure 4 comprises a multifunction machine.

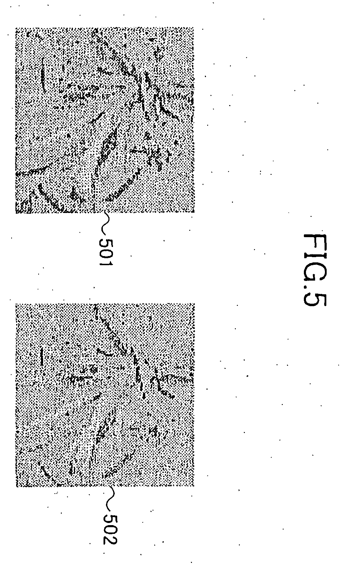

Figure 5 shows two images illustrating an example of adaptive nonlinear image enlargement using wavelet transform coefficients compared with standard bicubic interpolation according to one embodiment. Image 501 was generated using standard bicubic interpolation. Image 502 was generated using wavelet-based nonlinear interpolation. In one embodiment, the pixel differences in the prior art algorithm are equivalent to Haar wavelet coefficients of a redundant wavelet transform. In contrast to the prior art algorithm, in one embodiment, the technique set forth herein using a redundant Haar transform interpolates a perfect step edge "exactly," i.e., the interpolated signal has also a perfect step edge.

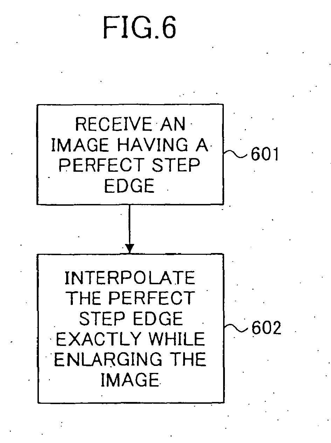

Figure 6 is a flow diagram illustrating one embodiment of a process for interpolating a step edge. In one embodiment, an image having a perfect step edge is received in process block 601, and the perfect step edge is interpolated exactly while the image is enlarged in process block 602.

In one embodiment, the technique is also applied using redundant wavelet transform coefficients for arbitrary wavelet types. It is also used for maximal decimated wavelet transforms and complex wavelet transforms.

In one embodiment, the technique is extended to include information from various levels of the wavelet decomposition by, e.g., using wavelet coefficients from larger scales for computation of the parameters $\mu$ and v.

In combination with a wavelet sharpening and smoothing ("WSS") technique, the enlargement may be performed after denoising by thresholding and sharpening/smoothing by rescaling of wavelet coefficients. For more information on WSS, see U.S. Patent Application Serial No. 09/467, 544, entitled "Multiscale Sharpening and Smoothing With Wavelets" filed on December 10, 1999, and assigned to the corporate assignee of the present invention.

In one embodiment, for the purpose of enlargement of JPEG2000 or similar compressed images, the technique described above is incorporated into the last level of the inverse wavelet transform on the decoder side.

A description will now be given of WSS (a multiscale sharpening and smoothing technique with wavelets) described in the above-mentioned U.S. Patent Application Serial No. 09/467, 544, published as US Patent 7,068,851.

The multiscale sharpening and smoothing techniques described herein, also referred to as multiscale unsharp masking, provides an alternative to the prior art methods and is simple to implement. This approach uses the smoothness properties of wavelet systems to provide the sharpening and smoothing.

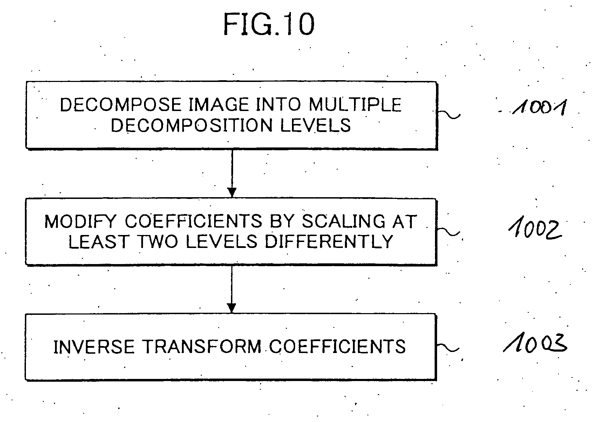

Specifically, the techniques described herein sharpen and smooth images over various levels of resolutions using a new sharpening/smoothing parameter. In one embodiment, the multiscale sharpening and smoothing is implemented in a wavelet decomposition by multiplying wavelet coefficients with a scale-dependent parameter. Figure 10 illustrates one embodiment of a method for processing image data. The method is performed by processing logic, which may comprise hardware, software or a combination of both. Referring to Figure 10, the process begins by decomposing the image data into multiple decomposition levels by applying a wavelet transform to the image data (processing block 1001). The transform that is applied to the image data may comprise, for example, a critically sampled discrete wavelet transform, an overcomplete discrete wavelet transform, a complex wavelet transform, a critically sampled or overcomplete wavelet packet transform. In one embodiment, the image data is transformed into multiple decomposition levels using a critically sampled transform for selected subbands an overcomplete transform in others. Then, after performing the decomposition, the process modifies coefficients in multiple decomposition levels by scaling coefficients in those decomposition levels using different scale, or level, dependent parameters for each of the decomposition levels (processing block 1002). For example, where scaling two levels, each coefficient in one of the decomposition levels is multiplied by a first scale dependent parameter and each coefficient in another of the decomposition levels is multiplied by a second scale dependent parameter.

In one embodiment, each of the different scale dependent parameters is determined according to the following formula:

$$\mu_j = 2^{j\alpha} \qquad (23)$$

where the value of $\alpha$ (positive or negative) indicates whether sharpening or smoothing is applied to coefficients and j indicates the particular scale (level). In one embodiment, sharpening is applied to coefficients if $\alpha$ is less than zero and smoothing is applied to coefficients if $\alpha$ is greater than zero. Thus, if $\mu_j$ is greater than 1, then the result of the scaling operation is smoothing, while if $\mu_j$ is less than 1, then the result of the scaling operation is sharpening. The rescaling is applied only to wavelet (detail) coefficients, not scaling coefficients. In order to preserve the total energy of the image, a renormalization of the wavelet coefficients may be necessary.

In one embodiment, the scale dependent parameter is selected based on knowledge of the image data. That is, information extracted directly from the image can be incorporated in the choice of the sharpening or smoothing parameter. For example, knowledge that the input data indicates step edges may be used to select the sharpening or smoothing parameter. Knowledge of the source of the image, e.g., scanner, may also be the basis of the selection of the sharpening or smoothing parameter. For example, this knowledge could be information on the point spread function in a scanner or other image source. In still another embodiment, the scale dependent parameter may be selected based on a monotonic function. The scale dependent parameter may be selected based on an estimate of the decay of wavelet coefficients across scales.

Referring back to Figure 10, after.performing the multiscale sharpening and/or smoothing, processing logic performs an inverse transform on scaled (and unscaled) coefficients (processing block 1003).

This technique may be combined with other wavelet-based image processing methods such as, for example, denoising. That is, multiscale sharpening and smoothing may be combined with other image processing steps in the wavelet domain. It has been shown in many applications that wavelet denoising is successful because edges are kept sharp whereas the noise is removed in smooth regions. This denoising can be simply done by thresholding wavelet coefficient. Suitable thresholding techniques include hard and soft thresholding. See, for example, Donoho, D.L. "Denoising by Soft-Thresholding, IEEE Trans. Inform. Theory, 41(3):613-627, 1995..

In one embodiment, simultaneously denoising and sharpening may be performed on wavelet coefficients by multiplying all coefficients above a predetermined threshold by a scaling parameter and setting all coefficients in the same decomposition level below a threshold to zero or to a value near zero. In one embodiment, all the values of coefficients are reduced by a predetermined amount that might be given by a monotonic function. The resulting coefficients are then multiplied with the scale dependent parameter.

In the presence of random White Gaussian Noise, one advantage of the combined denoising and sharpening/ smoothing technique is that the denoising threshold can be computed directly from wavelet coefficients and the amount of input data, but does not depend on the actual signal. Whereas with traditional sharpening the problem of sharpening not only "real" edges, but also noise pixels; occurs wavelet sharpening and denoising can be done, for example, by choosing a threshold, multiplying all coefficients above that threshold by $u_j = 2^{j\alpha}$ and setting all coefficients below a threshold to zero. This leads to easy implementation of signal adaptive smoothing and sharpening as needed or required, e.g., in a digital copier.

A common model for noise in data is additive Gaussian White noise. A technique developed by Donoho and Johnstone for denoising with wavelets is a state of the art denoising technique. The denoising is performed by simply thresholding wavelet coefficients. The threshold depends only on the size of the data N, where N is the number of samples (for an image, the number of samples.is the number of pixels) and the standard deviation of the noise $\sigma$, the threshold is:

$$\sigma \sqrt{2 \log N}$$

The latter parameter can be estimated from the standard deviation of the first level of wavelet coefficients: Asymptotically, all noise should be removed as N goes to infinity using that technique. However, in practical application, there may still be some noise present in the data due to the finiteness of the data or different threshold selection. It is also known that the human visual system corresponds positively to some noise present in, for example, images. After the rescaling (sharpening or smoothing) of wavelet coefficients described herein, the inverse transform transforms the remaining White noise into Colored noise (e.g., coloring remaining noise).

Similarly, the wavelet coefficients may have to be renormalized, particularly to maintain the proportions of modified wavelet coefficients and original scaling coefficients as described in more detail below. The renormalization may be performed by applying a scalar to the coefficients in all levels or a subset of all levels. In one embodiment, renormalization may be combined with the sharpening or smoothing by multiplying all coefficients at one or more of the decomposition levels by a scale dependent parameter chosen to achieve renormalization and sharpening/smoothing. In an alternative embodiment, renormalization may be performed by computing a range of wavelet coefficients (e.g., the minimum and maximum coefficient values) before rescaling, and then perform the rescaling (sharpening or smoothing). Thereafter, the complete set of modified coefficients are scaled back to the original range (e.g., mapping the smoothed or sharpened coefficients back into the original range specified by the minimum and maximum coefficient values) before the rescaling.

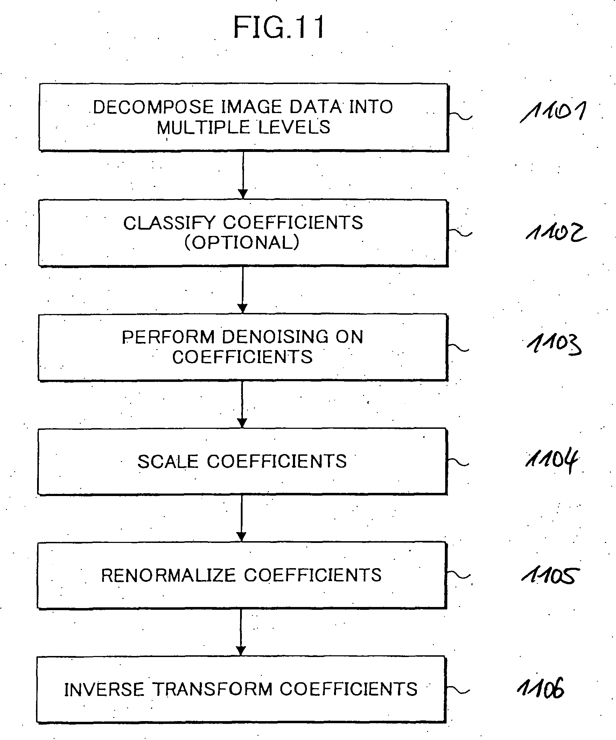

Figure 11 illustrates another embodiment of the process for processing image data. The process is performed by processing logic that may comprise hardware, software, or a combination of both. Referring to Figure 2, the process begins by processing logic decomposing the image data into multiple decomposition levels by applying a wavelet transform to the image data (processing block 1101).

Once decomposition has been completed, then processing logic classifies the coefficients at different decomposition levels and bands (processing block 1102). This classification is optional. In one embodiment, coefficients are classified into "text" and "background" depending on a predetermined criterion. The resulting classification may be used for adapting the smoothing or sharpening to compensate for the type of data being processed.

Then, processing logic performs denoising on coefficients in one or more of the decomposition levels (processing logic 1103).

After performing the decomposition and classification, the processing logic modifies in multiple decomposition levels by scaling classified coefficients in those decomposition levels using different scale (level) dependent parameters for each of the decomposition levels (processing block 1104). In one embodiment, the parameters may be band dependent parameters. For a 1D transform, there is one band (or subband) for each scale (level). For 2D or higher dimensional transforms, each band is a particular scale (level) and orientation. For example, a 2D transform has a band for the first scale (level) and for the vertical detail (high-pass) and the horizontal smooth (low-pass).

After sharpening or smoothing has been performed, processing logic performs renormalization on the coefficients (processing block 1105) on all levels or a subset of all levels. Once renormalization has been performed, processing logic performs an inverse transform on scaled (and unscaled) coefficients (processing block 1106).

Note that techniques for sharpening and smoothing described herein are advantageous in that "real" edges are magnified over various scales more than noise pixels and smooth areas are smoothed over various scales. The techniques may also outperform the traditional unsharp masking with respect to the quality of the processed image.

Sharpening/Smoothing Theory

The theory behind the sharpening and smoothing techniques of the present invention, is described below. In the following, a description is given as to how these results can be used for deriving multiscale unsharp masking via discrete wavelet decomposition.

Let (H, H*,G,G*) be a quadruple of biorthogonal wavelet filters (H = lowpass, G = highpass), where H and G are used in the forward transform and H* and G* in the inverse transform. In the Z-transform domain a 2-channel perfect reconstruction filter bank is required to satisfy the following conditions (see e.g., G. Straug, T. Nguyen, "Wavelets and Filter Banks," Wellesley-Cambridge Press, 1996).

$$H^*(z)\ H(z)\ +\ G^*(z)\ G(z)\ =\ 2\ z^{-m} \qquad (24)$$

$$H^*(z)\ H(-z)\ +\ G^*(z)\ G(-z)\ =\ 0. \qquad (25)$$

As a consequence the following equality, also known as perfect reconstruction property, is guaranteed for an arbitrary signal X:

$$z^m X(z)\ =\ \tfrac{1}{2}\ [H^*(z)H(z)X(z)\ +\ H^*(z)H(-z)X(-z)]\ +\ \tfrac{1}{2}$$

$$[G^*(z)G(z)X(z)\ +\ G^*(z)G(-z)X(-z)].$$

Introducing the following notations:

$$F_0[X](z)\ :=\ \tfrac{1}{2}\ [H^*(z)H(z)X(z)\ +\ H^*(z)H(-z)X(-z)]$$

(lowpass output) and

$$F_1[X](z)\ :=\ \tfrac{1}{2}\ [G^*(z)G(z)X(z)\ +\ G^*(z)G(-z)X(-z)]$$

(highpass output)
the perfect reconstruction property can be rewritten as

$$z^m X(z)\ =\ F_0\ [X](z)\ +\ F_1\ [X](z). \qquad (26)$$

If the filters H and G are symmetric and centered around zero the delay is zero, i.e. m=0.

Since $F_0$ is a lowpass and $F_1$ is a highpass filter, there exists a wavelet formulation of the definition of a sharpened image $F_{dwt-s}$ (x) by

$$x_{dwt-s} [z] := F_0 [x](z) + \mu F_1 [x](z). \qquad (27)$$

where the wavelet sharpening parameter $\mu$ is equivalent to the parameter $\lambda$ in the traditional sharpening method .

When computing scaling and wavelet coefficients at larger decomposition levels, the input data X are the scaling coefficients $s^j$ at a specific scale j. The wavelet sharpening parameter $\mu$ can differ from scale to scale (i.e., level to level). The results from the theory of smoothness spaces, which is described in, for example, Y. Meyer, "Wavelets and Operators," Cambridge University Press, Cambridge, WC, 1992, lead in a natural way to a definition of multiscale sharpening by choosing a scale-dependent sharpening parameter.

$$\mu_j = 2^{j\alpha}. \quad \text{with } \alpha<0 \qquad (28)$$

The parameter $\alpha$ changes the overall smoothness of the signal in terms of Hoelder regularity.

The "sharpened" scaling coefficients $s^j{}_{dwt-s}$ at scale j are then defined as

$$s^j{}_{dwt-s} = F_0 [s^j] + \mu_j F_1 [s^j]. \qquad (29)$$

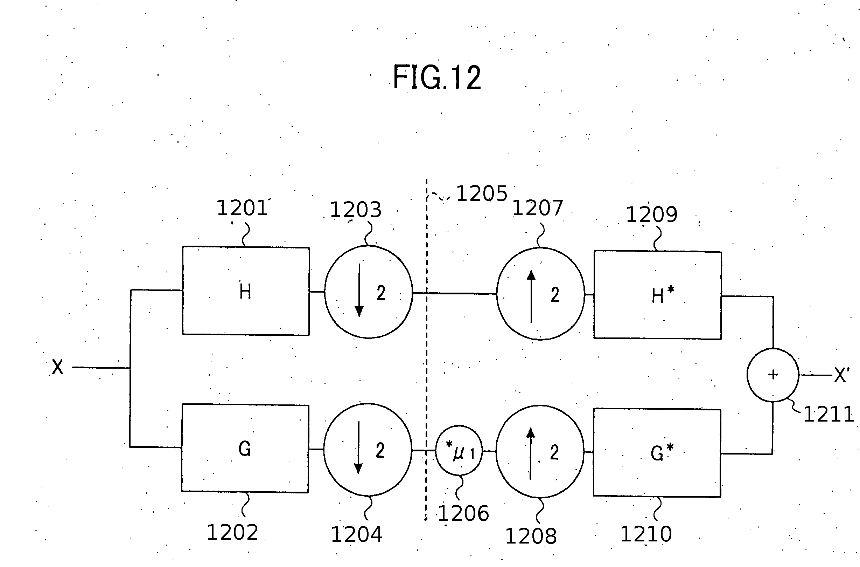

Analogous to the theoretical results on smoothness characterization, the parameter choice $\alpha<0$ sharpens the image. The range of $\alpha$ is bounded by constraints given through the chosen wavelet system. A block diagram of a first stage of a filter bank implementation of this method is shown in Figure 12. Referring to Figure 12, an input signal X is input into a low pass (H) wavelet filter 1201 and a high pass (G) filter 1202. The outputs of filters 1201 and 1202 are coupled to decimation units 1203 and 1204, respectively, which decimate the signals from filters 1201 and 1202 by two (critically subsampled). Line 1205 represents the separation between the analysis portion and the synthesis portion of the system shown in Figure 12. Although not shown, the low pass transferred signals may be input into filters 1201 and 1202 iteratively to create additional decompositional levels with parameter $m\mu_j$. This process may be repeated to create any number of decomposition levels (e.g., 2, 3, 4, 5, etc.).

Between the analysis portion and the synthesis portion, a coder and decoder may be included (not shown to avoid obscuring the invention). The coder and decoder may contain all the processing logic and/or routines performed in the transformed domain (e.g., prediction, quantization, coding, etc.).

The critically subsampled signals that are output from decimation unit 1204 are input to scaling unit 306 (after any coding and decoding). Scaling unit 306 applies different scale dependent parameters $\mu$ to transformed signals of multiple decomposition levels.

The subsampled transformed signals that are output from decimation unit 1203 and the scaled output from scaling unit 1206 are input to upsampling units 1207 and 1208, respectively, which upsamples the transformed signals by 2 (e.g., a zero is inserted after every term) and then passes the signals to low pass inverse wavelet transform filter 1209 and high pass inverse wavelet transform filter 1210, respectively. The outputs of filters 1209 and 1210 are combined by addition unit 1211 to produce an output signals $X^1$. Addition unit 1211 adds its two inputs. In alternative embodiments, addition unit 1211 may write to alternating locations in memory (e.g., frame buffer) or store the information using addresses selected to result in the combined output.

In order to preserve the total energy of the image and to maintain the proportions of modified wavelet and original scaling coefficients a renormalization of wavelet coefficients may be used. In one embodiment, this is done by dividing the modified coefficients by $\sqrt{n_{\alpha\gamma}}$ where

$$n_{\alpha,\gamma} = \left[ \frac{2^{(L+1)2(\gamma+\alpha)} - 2^{2(\gamma+\alpha)}}{2^{2(\gamma+\alpha)} - 1} \right] / \frac{2^{(L+1)2\gamma} - 2^{2\gamma}}{2^{2\gamma} - 1} \quad \text{for } -\alpha \neq \gamma. \qquad (30)$$

$$n_{a,\gamma} = L / \left[ \frac{2^{(L+1)2\gamma} - 2^{2\gamma}}{2^{2\gamma} - 1} \right] \text{ for } -\alpha = \gamma \quad . \qquad (31)$$

$\gamma$ is the upper bound on the Hoelder regularity range of the wavelet system and $\alpha$ is the chosen sharpening parameter. For a Daubechies-8 wavelet system of order 4 (filter length = 8, $\gamma$ = 1.596 with $\alpha$ = -1.596 the normalization factor results in

$$\sqrt{L / \left[ \frac{2^{(L+1)-3.192} - 2^{3.192}}{2^{3.192} - 1} \right]} \quad . \qquad (32)$$

Hoelder regularity and vanishing moments for various Daubechies wavelet systems from the book by Ingrid Daubechies, "Ten Lectures on Wavelets," SIAM, Philadelphia, PA, 1992 are shown in Table 1 below:

Table 1

| Daubechies wavelet system of order N | Hoelder regularity | Vanishing moments | $\gamma$ =min(Hoelde r, vanishing moments) |
|---|---|---|---|
| 1 | - | 1 | - |
| 2 | $\geq$0.5 | 2 | $\geq$0.5 |
| 3 | $\geq$0.915 | 3 | $\geq$0.915 |
| 4 | $\geq$1.596 | 4 | $\geq$1.596 |
| 5 . | $\geq$1.888 | 5 | $\geq$1.888 |
| 6 | $\geq$2.158 | 6 | $\geq$2.158 |

The parameter $\gamma$ is the minimum of vanishing moments and Hoelder regularity. Alternative renormalization techniques may be used.

The lack of shift-invariance of the critically sampled DWT is a disadvantage for image processing steps such as denoising and also multiscale smoothing and sharpening because one particular edge could be smoothed or sharpened differently depending on the alignment of the edge in the wavelet tree. To overcome this disadvantage, an overcomplete (redundant) DWT, denoted by RDWT, is chosen and outperforms the critically sampled DMT. If an RDWT is chosen for sharpening an image, the same approach as described above may be used to define a multiscale unsharp masking. The main difference is that down- and up-sampling steps in the filter bank are neglected.

The perfect reconstruction property of the RDWT at scale 1 is given by

$$x(z) = \frac{1}{2} (H^* H[x](z) + G^* G[x](z)). \qquad (33)$$

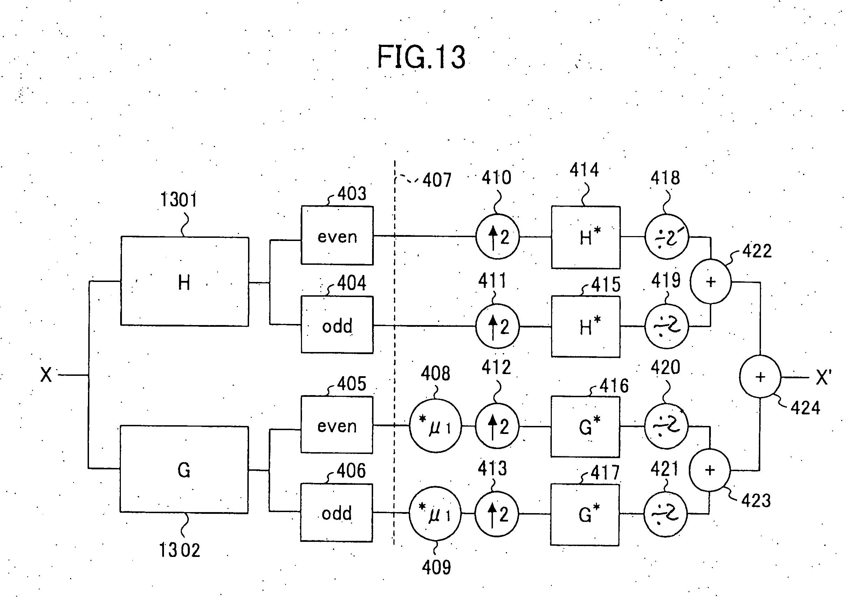

A schematic overview is shown in Figure 13. Referring to Figure 13, an input signal X is input to low pass wavelet transform filter 1301 and high pass wavelet transform 1302 The output of filter 1301 is separated into filter 1302. The output of filter 1301 is separated into even coefficients 403 and odd coefficients 404, and the output of filter 1302 is separated into even coefficients 405 and odd coefficients 406. Note that no decimation is performed. As with line 1205 of Figure 12, line 407 again represents the separation between the analysis and synthesis portions and may include coding and decoding operations as described herein. Also, the coefficients output from low pass filter 1301 may be fed back into filters 1301 and 1302 iteratively to create a number of decomposition levels.

Scaling units 408 and 409 apply a scale dependent parameter to the even and odd coefficients as described above to multiple decomposition levels: The outputs of scaling units 408 and 409 and the even and odd coefficients from filter 1301 are upsampled by upsampling units 410-413. The outputs of upsampling units 410 and 411 are coupled to inputs of low pass inverse transform filters 414 and 415 respectively, and the outputs of upsampling units 412 and 413 are coupled to inputs of high pass inverse transform filters 416 and 417 respectively. The outputs of inverse filters 414-417 are coupled to divider units 418-421, which divide the outputs by 2 to results in averaging two numbers to compensate for the use of an overcomplete DWT. The renormalization proceeds along the same lines as for a DWT, just the value gamma for the wavelet system is, roughly speaking, doubled (see table 1).

Addition unit 422 adds the outputs of decoder units 418 and 419, while addition unit 423 adds the outputs of divider units 420 and 421. Addition unit 424 adds the outputs of addition units 422 and 423 to create the $X^1$ signal. Addition units 422-424 may operate in a well-known manner, such as, for example, described above.

If the filters H and G are orthogonal the filters H*H and G*G in the first stage of the filter bank are simply the autocorrelation filters of H and G.

For scales j > 1 the perfect reconstruction property is expressed using not the original filters H,H*,G,G*, but iterated versions of those, denoted by $H_j, H^*_j, G_j, G^*_j$, as follows:

$$s^{j-1}(z) = \tfrac{1}{2} (H^*_j H_j [s^{j-1}](z) + G^*_j G_j [s^{j-1}](z)).$$

In analogy with the critically sampled case, a sharpened image $x_{rdwt-s}$ can be defined as

$$x_{rdwt-s} := 1/2 (H^* H [x] + \mu G^* G [x]). \qquad (34)$$

By choosing $\mu^j = 2^{j\alpha}$ sharpened ($\alpha<0$) late scaling coefficients may be obtained by

$$S^1_{rdwt-s} = 1/2 (H^* H [S^1] + \mu_1 G^* G [S^1]). \qquad (35)$$

at scale j=1. For scales j>1 the sharpened scaling coefficients are defined as

$$S^j_{rdwt-s} = 1/(2^{j+1}) (H^*_j H_j [S^j] + \mu_j G^*_j G_j [S^j]). \qquad (36)$$

The filter bank implementation for overcomplete multiscale sharpening is shown in Figure 13. Compared to the maximal decimated filter bank structure in Figure 3, the down-sampling by a factor of two is neglected. But in the same way as in Figure 12, the detail coefficients are multiplied by $\mu_j$. In contrast to the critically sampled DWT, the range of possible exponents is extended.

The normalization of modified wavelet coefficients may be performed in the same way as for the critically sampled DWT. The renormalization proceeds along the same lines as for a DWT, except that the value σ for the wavelet system is, roughly speaking, doubled. For overcomplete transforms, the values change as shown in Table 2 below:

Table 2

| Daubechies wavelet system of order N | Hoelder regularity of N overcomplete system | Vanishing moments of overcomplete systems | $\gamma$ =min(Hoelder, vanishing moments) |
|---|---|---|---|
| 1 | ≥1 | 2 | 1 |
| 2 | ≥1.0 | 4 | 1.0 |
| 3 | ≥1.830 | 6 | 1.830 |
| 4 | ≥3.192 | 8 | 3.192 |
| 5 | ≥3.776 | 10 | 3.776 |
| 6 | ≥4.316 | 12 | 4.316 |

Similarly to multiscale sharpening for critically sampled and overcomplete wavelet transforms, multiscale smoothing is possible for critically sampled and overcomplete wavelet transforms by choosing the parameter α to be greater than zero.

There are some advantages of knowing the smoothness of the original data and the processed input data. Assume the input data is a smoothing of the original data by rescaling wavelet coefficients obtained from applying an orthogonal DWT, then the technique described herein can reconstruct the original data exactly. For example, it means that a smoothed step edge in the processed input data can be reversed to the original step edge.

Multiscale smoothing and sharpening using a DWT with orthogonal wavelets is invertible, while, in contrast, the RDWT is not invertible. The reason for this is that the RDWT is not an orthogonal transform and, in general,

$$\tfrac{1}{2} H \ (H^* \ H[x] + \mu \ G^* \ G[x]) \ + \ \tfrac{1}{2} G \ (H^* \ H[x] + \mu \ G^* \ G[x]) \ \neq$$

$$H[x] + \mu \ G[x]. \qquad (37)$$

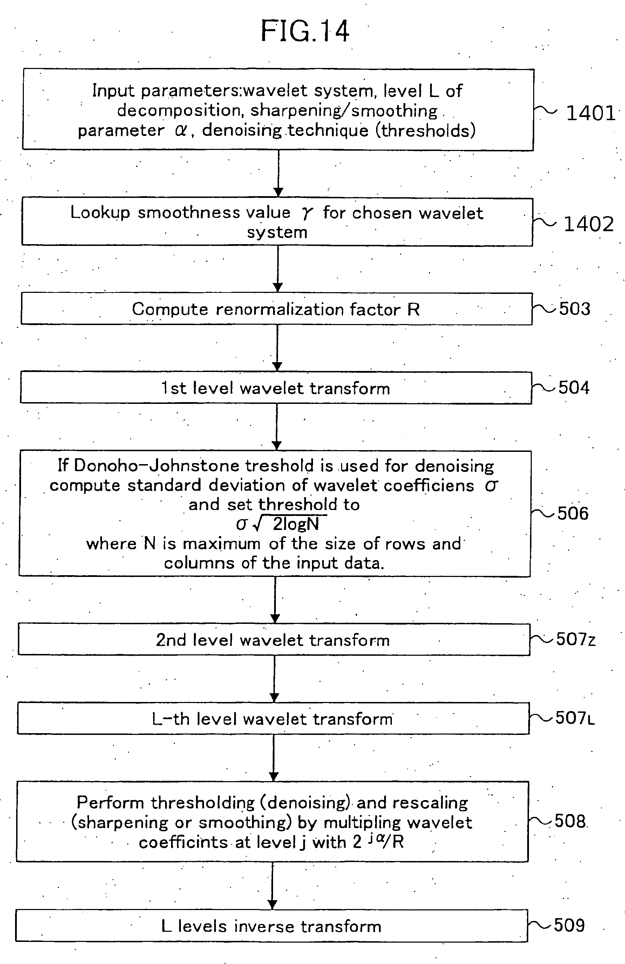

Figure 14 illustrates a flow chart of one embodiment of the process for performing multi-scale sharpening and smoothing with wavelets. Referring to Figure 14, the process begins with processing logic receiving input parameters (processing block 1401). In one embodiment, the input parameters comprise the type of wavelet system, the number of decomposition levels, the sharpening/smoothing parameter, and the denoising technique. With respect to the denoising technique, the input parameters comprise thresholds for the denoising technique.

Once the input parameters have been received, processing logic looks up the smoothness value $\gamma$ for the chosen wavelet system (processing block 1402) and computes the renormalization factor are using formula (37) given above (processing block 503). The values of $\gamma$ may be stored in a look up table, with each entry being associated with a different wavelet system. The processing blocks 1401, 1402, and 503 represent an initialization portion of the process. These steps are performed once, with the remaining steps being performed for every image.

After initialization, processing logic performs a first level wavelet transform (processing block 504). Processing logic then sets the threshold for denoising (processing block 505). In one embodiment, if the Donoho -Johnstone threshold is used for denoising, processing logic computes the standard deviation of wavelet coefficients and sets the threshold to:

$$\sigma \sqrt{2 \log N}$$

where N is the maximum of the rows and columns of the data and $\sigma$ is the standard deviation of the first level of wavelet coefficients.

Next, processing logic performs the second level wavelet transform on the coefficients (processing block 507Z). Processing logic performs other wavelet transforms up to the L-th level of the wavelet transform (processing block $507_L$).

After performing the wavelet transforms, processing logic performs thresholding (denoising) and rescaling (sharpening or smoothing) by multiplying wavelet coefficients at level j with:

$$2^{j\alpha}\!/\!\mathcal{R}$$

(processing block 508). Thereafter, processing logic performs L levels of the inverse transform (processing block 509).

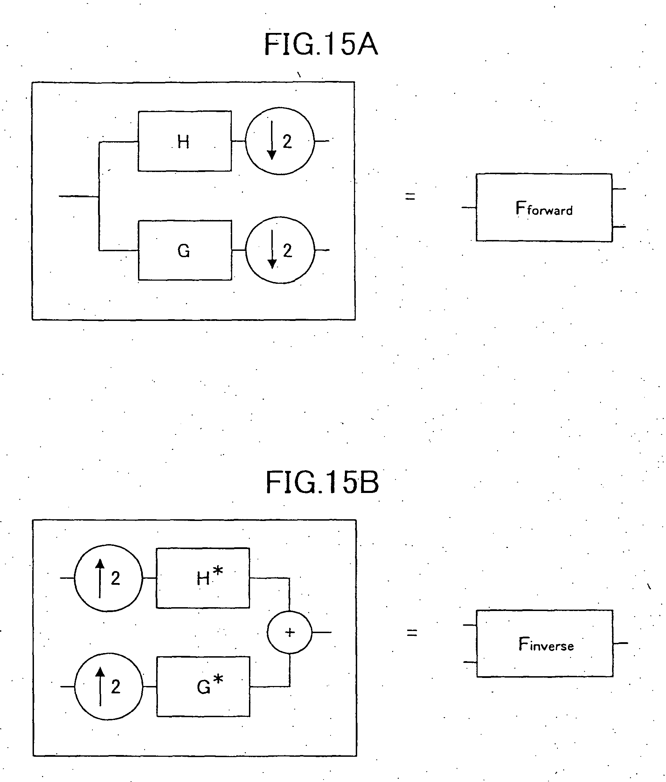

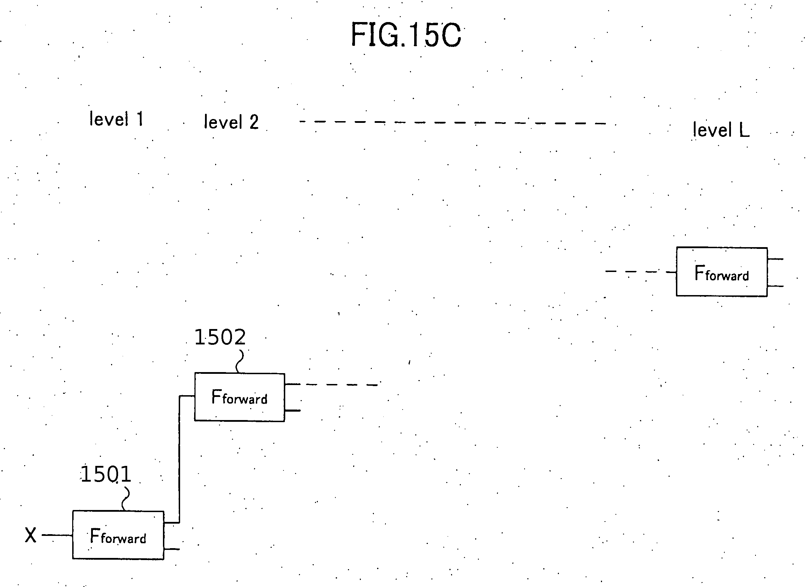

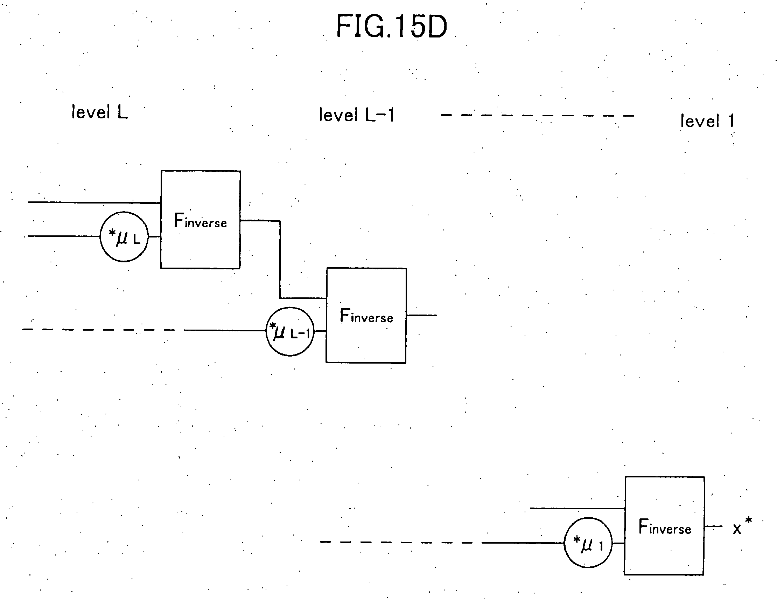

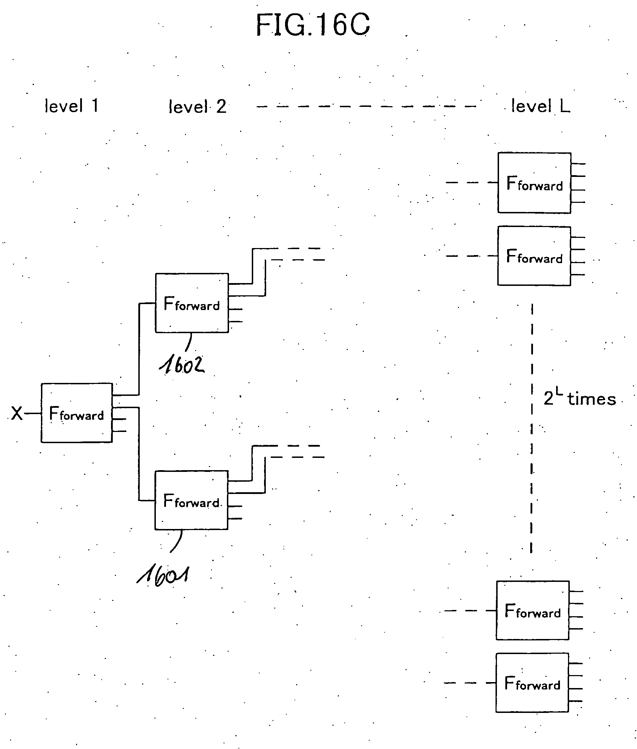

Figures 15A-15D illustrate forward and inverse transform. Figure 15A and 15B illustrate building blocks for the forward and inverse discrete wavelet transform (.DWT) respectively. Note that these are similar to the similarly named blocks in Figure 12. Figure 15C is one embodiment of a forward DWT for L levels of decomposition. Referring to Figure 16C, the input X is input into the level one forward DWT block 1601. The output of the level one forward DWT 1601 is input to the level two forward DWT block 1602 and continues through the remaining levels of decomposition to level L in similar fashion. Figure 15D illustrates the inverse DWT with rescaling (sharpening/smoothing) L levels of decomposition. Referring to Figure 15D, note that there is a sharpening/smoothing parameter for each level of the inverse DWTs. That is, the sharpening/smoothing parameter is the same for all transform steps being performed on the same level.

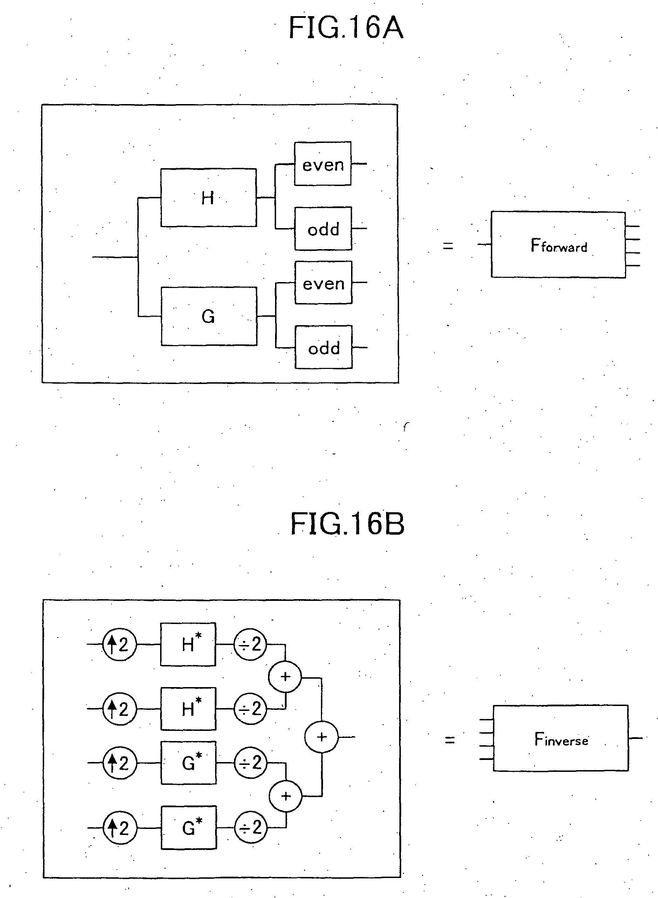

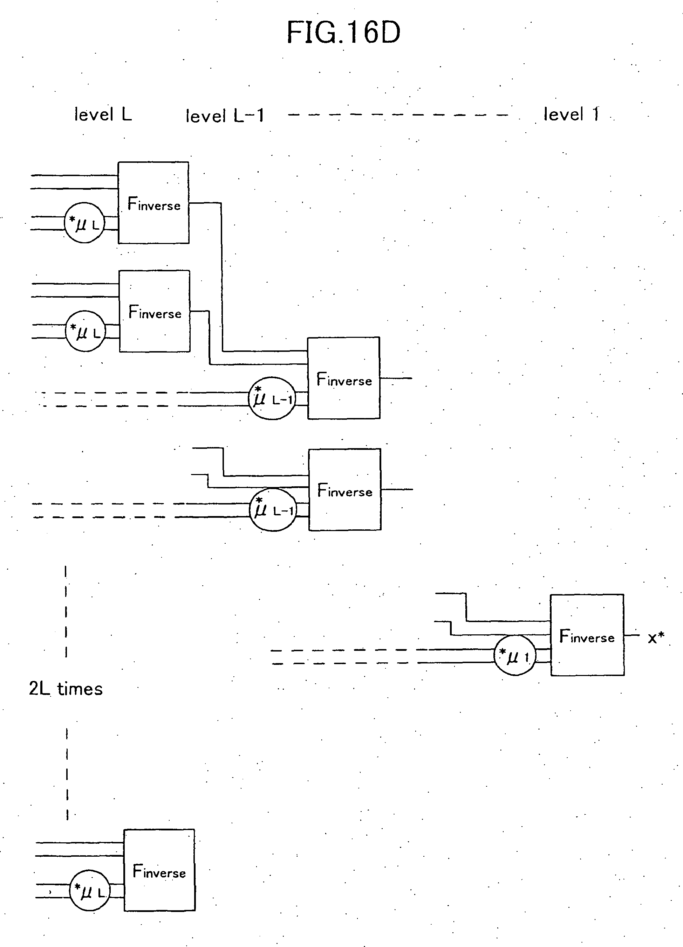

Figures 16A-16D illustrate the application of sharpening/smoothing to RDWTs. Figures 16-16B illustrate the building block for forward and inverse redundant DWT (RDWT), respectively. Figure 16C illustrates a forward RDWT for L levels of decomposition. Figure 16D illustrates the inverse RDWT for all levels of decomposition with rescaling (sharpening/smoothing) for L levels of decomposition. Referring to Figure 15D, the rescaling parameter is the same for each of the individual processing blocks in each level. However, the rescaling parameter may be different from level to level.

<u>Selecting the Sharpening/Smoothing Parameter</u>

Depending on knowledge about the smoothness of the input data and output data, there are different possibilities to determine the parameter $\alpha$. Four different techniques are described below; however, other techniques may be used. First, if the available input data are data obtained from sending original data through an input device, such as a scanner, the Hoelder regularity of the data is that of the input device. In case of the scanner, the regularity is given by the smoothness of the pointspread function. If the original data have smoothness $\beta$ and the scanned input data have smoothness $\varepsilon$, then a reasonable choice for the sharpening parameter would be $-(\varepsilon-\beta)$. However, the term $|\varepsilon-\beta|$ is not allowed to be larger than $\gamma$, the Hoelder regularity of the wavelet system. Therefore, the sharpening parameter should be $\alpha = 0$ if $\beta>\gamma$ and $\varepsilon>\gamma$, and $\alpha = \min(\gamma,\varepsilon) - \beta$ if $\beta\leq\gamma$.

If the knowledge of the smoothness of the input data does not exist, the corresponding Hoelder regularity E can be estimated from the decay of wavelet coefficients across scale. The Hoelder regularity E should be the smallest number such that $\left| d_{j,k} \leq C 2^{j\left(\varepsilon+\frac{1}{2}\right)} \right|$ for a constant C>0 and scales j and positions k.

If the original data contain step edges as occurs, in the text regions, for example the original smoothness $\beta$ is equal to zero. Given the smoothness $\beta$ of the original data the sharpening/smoothing parameter $\alpha$ should be always chosen such that that $0<\beta+\alpha\leq\gamma$.

When processing a scanned image, the exponent $\alpha = -1$ may be used, which has a theoretical reason. An image can be modeled as a function that consists of smooth regions and step edges. By scanning this image, the step edges get blurred. This blurring can be modeled as a convolution with a Gaussian kernel or a kernel of similar characteristic. As a consequence, the overcomplete wavelet decomposition with the Haar system will capture a decay of wavelet coefficients described by the exponent 1. In order to sharpen the scanned image, i.e. to reverse smoothing of the edges, the exponent $\alpha = -1$ is chosen as an exponent in the sharpening parameter. The parameter $\gamma$ in the normalization constant in Eq. (30) above is $\gamma = 1$. In this case for a total decomposition level L=3, the following modifications of the wavelet coefficients have to be made:

multiplication of the first level of wavelet coefficients by

$$\left(2^{-1}\right)/\sqrt{9/\left(2^8 - 4\right)} = 2.6458$$

multiplication of the second level of wavelet coefficients by

$$\left(2^{-2}\right)/\sqrt{9/\left(2^8 - 4\right)} = 1.3229$$

multiplication of the third level of wavelet coefficients by

$$\left(2^{-3}\right)/\sqrt{9/\left(2^8 - 4\right)} = 0.6614$$

Thus, a general scheme has been described of how to choose the sharpening parameter in applications that involve scanned documents, e.g., in a digital copier, a digital camera, facsimile machine, printer, etc.

Another application of the multiscale sharpening and smoothing is to perform an adaptive smoothing or sharpening depending on the wavelet coefficients. Therefore, that only selected coefficients get sharpened by multiplication with $2^{j\alpha}$ with $\alpha<0$ and coefficients in smooth areas get smoothed by multiplication by $2^{j\beta}$ with $\beta>0$ with a overcomplete Haar system.

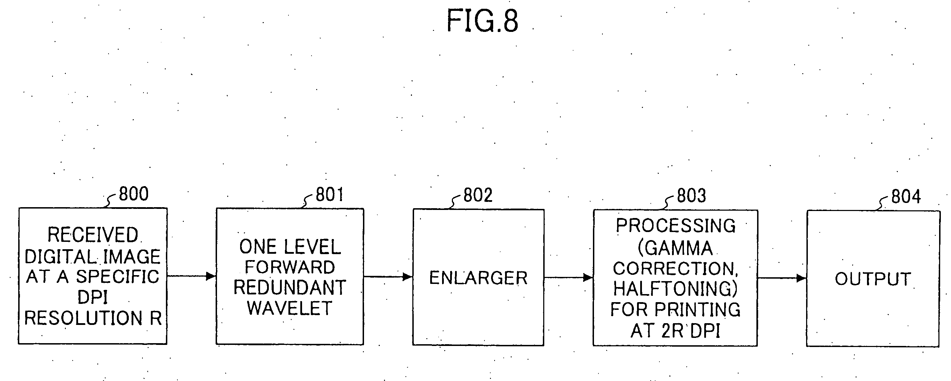

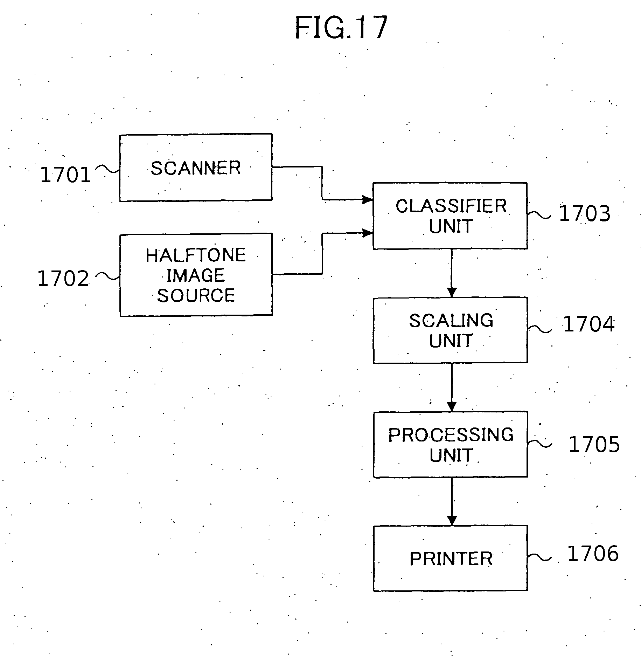

One embodiment of a digital copier is shown in Figure 8. Referring to Figure 17, a scanner 1701 or other halftone image source 1702 supplies an image to classifier unit 1703, which classifies the image data as text and background. The output of classifier unit 1703 is received by scaling unit 1704 which performs smoothing or sharpening depending on the classified pixel. Note that the use of classification and basing the sharpening/smoothing on the classification is optional. The output of scaling unit 1704 is coupled to processing unit 805 which performs other processes . (e.g., downsampling, gamma correction, halftone, etc.). The output of processing unit 1705 is received by printer 1706, which prints the image:

A description will now be given of applications of the present invention.

Applications

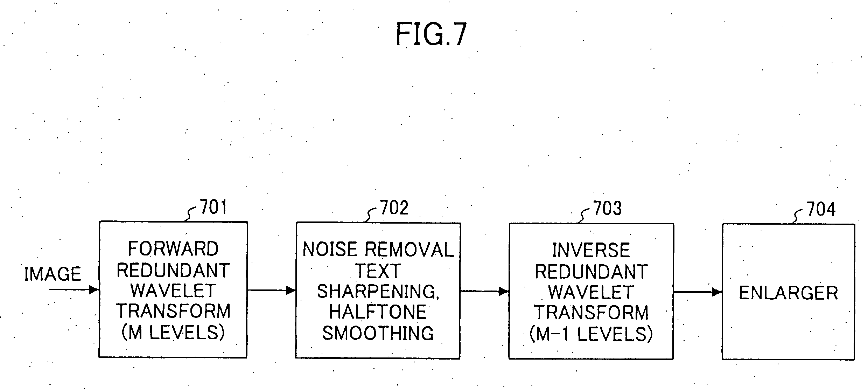

There are a number of additional applications in which the adaptive non-linear image enlargement described herein may be advantageous. For example, adaptive non-linear image enlargement may be used in the enlargement process in a digital copier processing path. Such a system is shown in Figure 7. Referring to Figure 7, a forward redundant wavelet transform 701 is applied to an image. The wavelet transform 701 may be applied M times to the image, such that there are M levels, where M is greater than 1. After applying the forward redundant wavelet transform 701, noise removal, text sharpening, halftone smoothing is applied to the coefficients at image processor 702. After such processing, an inverse redundant wavelet transform 703 is applied to the processed coefficients. In one embodiment, the inverse redundant wavelet transform 703 is applied M-1 times so that there are M-1 levels. After applying the inverse redundant wavelet transform 703, an enlarger 704 performs the enlargement process described herein. Note that each of these blocks may be implemented in software, hardware or a combination of both.

The adaptive non-linear image enlargement may be utilized in an upsampling process in which upsampling is done for printing at a higher dpi, e.g., images scanned at 600 dpi and printed at 1200 dpi. Such a system is shown in Figure 8. Referring to Figure 8, a one level redundant wavelet transform 801 is applied to a received digital image at a specific dpi resolution R (800). The coefficients are output to enlarger 802 which performs the enlargement process described herein. After enlargement, processing is performed for printing at 2R dpi by image processor 803. The processing may include gamma correction, halftoning, etc. The output 804 is a processed image. In this manner, the adaptive non-linear image enlargement process is used to repair the lower resolution image for high resolution printing. Note that each processing element in Figure 8 may be implemented in hardware, software, or a combination of both.

Other applications include the use of the adaptive non-linear image enlargement technique described herein for the enlargement of JPEG2000 images. This might require an addition to a JPEG decoder to compensate for the non-linear image enlargement.

Another application is digital cameras. Specifically the adaptive non-linear image enlargement process may be performed for demosaicing in a digital camera.

An Exemplary Computer System

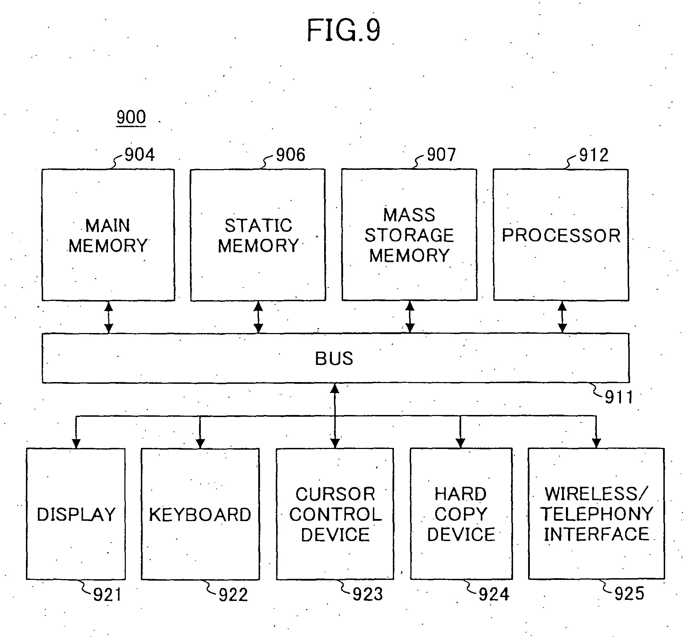

Figure 9 is a block diagram of an exemplary computer system that may perform one or more of the operations described herein. Referring to Figure 9, computer system 900 may comprise an exemplary client or server 900 computer system. Computer system 900 comprises a communication mechanism or bus 911 for communicating information, and a processor 912 coupled with bus 911 for processing information. Processor 912 includes a microprocessor, but is not limited to a microprocessor, such as, for example; Pentium™, PowerPC™, etc.

System 900 further comprises a random access memory (RAM), or other dynamic storage device 904 (referred to as main memory) coupled to bus 911 for storing information and instructions to be executed by processor 912. Main memory 904 also may be used for storing temporary variables or other intermediate information during execution of instructions by processor 912.

Computer system 900 also comprises a read only memory (ROM) and/or other static storage device 906 coupled to bus 911 for storing static information and instructions for processor 912, and a data storage device 907, such as a magnetic disk or optical disk and its corresponding disk drive. Data storage device 907 is coupled to bus 911 for storing information and instructions.

Computer system 900 may further be coupled to a display device 921, such as a cathode ray tube (CRT) or liquid crystal display (LCD), coupled to bus 911 for displaying information to a computer user. An alphanumeric input device 922, including alphanumeric and other keys, may also be coupled to bus 911 for communicating information and command selections to processor 912. An additional user input device is cursor control 923, such as a mouse, trackball, trackpad, stylus, or cursor direction keys, coupled to bus 911 for communicating direction information and command selections to processor 912, and for controlling cursor movement on display 921.

Another device that may be coupled to bus 911 is hard copy device 924, which may be used for printing instructions, data, or other information on a medium such as paper, film, or similar types of media. Furthermore, a sound recording and playback device, such as a speaker and/or microphone may optionally be coupled to bus 911 for audio interfacing with computer system 900. Another device that may be coupled to bus 911 is a wired/wireless communication capability 925 to communication to a phone or handheld palm device.

Note that any or all of the components of system 900 and associated hardware may be used in the present invention. However, it can be appreciated that other configurations of the computer system may include some or all of the devices.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

**Claims**

1.  A method for image enlargement comprising the steps of:

    receiving a wavelet representation of an image, the wavelet representation comprising wavelet coefficients;
    performing predetermined image processing (701) on the received wavelet coefficients;
    performing an inverse redundant transform (703) on the image-processed wavelet coefficients; and
    performing image enlargement (704) by localized adaptive interpolation on the inverse redundant wavelet transformed coefficients.

2.  A method for image enlargement comprising the steps of:

    receiving a wavelet representation (800) of an image, the wavelet representation comprising wavelet coefficients;
    performing image enlargement (802) by localized adaptive interpolation on the wavelet coefficients in the wavelet domain, and
    performing predetermined image processing (803) on the wavelet coefficients on which the localized adaptive interpolation has been performed.

3.  The method of claim 2 further including the step of printing (804) a processed image.

4.  The method according to any of claims 1 to 3 further comprising performing upsampling (802) using adaptive filters on wavelet coefficients.

5.  The method according to any of claims 1 to 3 wherein performing localized adaptive interpolation comprises performing interpolation on at least one of the wavelet coefficients if the at least one coefficients of the wavelet coefficients meets a condition.

6.  The method according to any one of claims 1 to 3 wherein performing localized adaptive interpolation on the wavelet coefficients in the wavelet domain comprises:

    applying a vertical inverse transform on columns of lowpass coefficients and detail coefficients to produce first (205) and second sets (206) of results;
    placing the first (205) and second sets (206) of results in first (207) and second (208) grid images, respectively, in which every other row in each of the first (207) and second (208) grid images has values of 0;
    performing interpolation using an interpolation technique on values in columns in the first (207) and second (208) grid images to create values for columns in the first (207) and the second (208) grid images that have values of 0;
    applying a horizontal inverse transform on rows of the first (207) and second (208) grid images to produce a third set (209) of results;
    placing the third (209) set of results in a third (210) grid image, respectively, in which every other column in the third (210) grid image has values of 0; and
    performing an interpolation using the interpolation technique on values in rows in the third (210) grid image to create values for rows in the third (210) grid image that have values of 0.

7.  The method according to any of claims 1 to 3 wherein performing localized adaptive interpolation on the wavelet coefficients in the wavelet domain comprises:

    applying a horizontal inverse transform on rows of lowpass coefficients and detail coefficients to produce first (205) and second (206) sets of results;
    placing the first (205) and second (206) sets of results in first (207) and second (208) grid images, respectively, in which every other column in each of the first (207) and second (208) grid images has values of 0;

performing interpolation using an interpolation technique on values in rows in the first and second grid images to create values for rows in the first and second grid images that have values of 0;

applying a vertical inverse transform on columns of the first (207) and second (208) grid images to produce a third (209) set of results;

placing the third (209) set of results in a third (210) grid image, respectively, in which every other row in the third (210) grid image has values of 0; and

8. An apparatus for image enlargement comprising:

means for a wavelet representation of an image, the wavelet representation a comprising wavelet coefficients;
means for performing predetermined image processing (701) on the received wavelet coefficients;
means for performing an inverse redundant transform (703) on the image-processed wavelet coefficients; and
means for performing image enlargement (704) by localized adaptive interpolation on the inverse redundant wavelet transformed coefficients.

9. An apparatus for image enlargement comprising:

means for receiving a wavelet representation (800) of an image, the wavelet representation comprising wavelet coefficients;
means for performing image enlargement (802) by localized adaptive interpolation on the wavelet coefficients in the wavelet domain, and
means for performing predetermined image processing (803) on the wavelet coefficients on which the localized adaptive interpolation has been performed.

10. The apparatus of claim 9 further comprising means for printing (804) a processed image.

11. The apparatus according to any of claims 8 to 10 further comprising means for performing upsampling (802) using adaptive filters on wavelet coefficients.

12. The apparatus according to any of claims 8 to 10 wherein the means for performing localized adaptive interpolation comprises means for performing interpolation on at least one of the wavelet coefficients if the at least one coefficients of the wavelet coefficients meets a condition.

13. The apparatus according to any one of claims 8 to 10 wherein the means for performing localized adaptive interpolation on the wavelet coefficients in the wavelet domain comprises:

means for applying a vertical inverse transform on columns of lowpass coefficients and detail coefficients to produce first (205) and second sets (206) of results;
means for placing the first (205) and second sets (206) of results in first (207) and second (208) grid images, respectively, in which every other row in each of the first (207) and second (208) grid images has values of 0;
means for performing interpolation using an interpolation technique on values in columns in the first (207) and second (208) grid images to create values for columns in the first (207) and the second (208) grid images that have values of 0;
means for applying a horizontal inverse transform on rows of the first (207) and second (208) grid images to produce a third set (209) of results;
means for placing the third (209) set of results in a third (210) grid image, respectively, in which every other column in the third (210) grid image has values of 0; and
means for performing an interpolation using the interpolation technique on values in rows in the third (210) grid image to create values for rows in the third (210) grid image that have values of 0.

14. The apparatus according to any of claims 8 to 10 wherein the means for performing localized adaptive interpolation on the wavelet coefficients in the wavelet domain comprises:

means for applying a horizontal inverse transform on rows of lowpass coefficients and detail coefficients to produce first (205) and second (206) sets of results;
means for placing the first (205) and second (206) sets of results in first (207) and second (208) grid images, respectively, in which every other column in each of the first (207) and second (208) grid images has values of 0;
means for performing interpolation using an interpolation technique on values in rows in the first and second grid images to create values for rows in the first and second grid images that have values of 0;

means for applying a vertical inverse transform on columns of the first (207) and second (208) grid images to produce a third (209) set of results;

means for placing the third (209) set of results in a third (210) grid image, respectively, in which every other row in the third (210) grid image has values of 0; and

means for performing an interpolation using the interpolation technique on values in columns in the third (210) grid image to create values for columns in the third (210) grid image that have values of 0.

15. An article of manufacture comprising one of more recordable media having executable instruction stored thereon which, when executed by a system, causes the system to:

receive a wavelet representation of an image, the wavelet representation comprising wavelet coefficients;

perform predetermined image processing (701) on the received wavelet coefficients;

perform an inverse redundant transform (703) on the image-processed wavelet coefficients; and

perform image enlargement (802) by localized adaptive interpolation on the inverse redundant wavelet transformed coefficients.

16. An article of manufacture comprising one of more recordable media having executable instruction stored thereon which, when executed by a system, causes the system to:

receive a wavelet representation (800) of an image, the wavelet representation comprising wavelet coefficients;

perform image enlargement (802) by localized adaptive interpolation on the wavelet coefficients in the wavelet domain, and

perform predetermined image processing (803) on the wavelet coefficients on which the localized adaptive interpolation has been performed.

performing an interpolation using the interpolation technique on values in columns in the third (210) grid image to create values for columns in the third (210) grid image that have values of 0.

17. The article of manufacture according to any of claims 15 to 16 wherein performing localized adaptive interpolation on the wavelet coefficients in the wavelet domain is performed by:

apply a vertical inverse transform on columns of lowpass coefficients and detail coefficients to produce first (205) and second sets (206) of results;

place the first (205) and second sets (206) of results in first (207) and second (208) grid images, respectively, in which every other row in each of the first (207) and second (208) grid images has values of 0;

perform interpolation using an interpolation technique on values in columns in the first (207) and second (208) grid images to create values for columns in the first (207) and the second (208) grid images that have values of 0;

apply a horizontal inverse transform on rows of the first (207) and second (208) grid images to produce a third set (209) of results;

place the third (209) set of results in a third (210) grid image, respectively, in which every other column in the third (210) grid image has values of 0; and

perform an interpolation using the interpolation technique on values in rows in the third (210) grid image to create values for rows in the third (210) grid image that have values of 0.

## Patentansprüche

1. Verfahren zur Bildvergrößerung, das die folgenden Schritte umfasst:

Empfangen einer Wavelet-Darstellung eines Bildes, wobei die Wavelet-Darstellung die Wavelet-Koeffizienten umfasst;

Ausführen einer vorgegebenen Bildverarbeitung (701) an den empfangenen Wavelet-Koeffizienten;

Ausführen einer inversen redundanten Transformation (703) an den bildverarbeiteten Wavelet-Koeffizienten; und

Ausführen einer Bildvergrößerung (704) durch lokalisierte adaptive Interpolation an den invers redundant transformierten Wavelet-Koeffizienten.

2. Verfahren zur Bildvergrößerung, das die folgenden Schritte umfasst:

Empfangen einer Wavelet-Darstellung (800) eines Bildes, wobei die Wavelet-Darstellung die Wavelet-Koeffizienten umfasst;

Ausführen einer Bildvergrößerung (802) durch lokalisierte adaptive Interpolation an den Wavelet-Koeffizienten im Wavelet-Bereich, und

Ausführen einer vorgegebenen Bildverarbeitung (803) an den Wavelet-Koeffizienten, an denen die lokalisierte adaptive Interpolation ausgeführt worden ist.

3. Verfahren nach Anspruch 2, das ferner den Schritt des Druckens (804) eines verarbeiteten Bildes enthält.

4. Verfahren nach einem der Ansprüche 1 bis 3, das ferner das Ausführen des Aufwärtsabtastens (804) an den Wavelet-Koeffizienten unter Verwendung adaptiver Filter umfasst.

5. Verfahren nach einem der Ansprüche 1 bis 3, wobei das Ausführen der lokalisierten adaptiven Interpolation das Ausführen der Interpolation an wenigstens einem der Wavelet-Koeffizienten umfasst, falls der wenigstens eine Koeffizient der Wavelet-Koeffizienten eine Bedingung erfüllt.

6. Verfahren nach einem der Ansprüche 1 bis 3, wobei das Ausführen der lokalisierten adaptiven Interpolation an den Wavelet-Koeffizienten im Wavelet-Bereich umfasst:

Anwenden einer vertikalen inversen Transformation auf die Spalten der Tiefpasskoeffizienten und der Detailkoeffizienten, um einen ersten (205) und einen zweiten (206) Satz von Ergebnissen zu erzeugen;

Anordnen des ersten (205) und des zweiten (206) Satzes von Ergebnissen in einem ersten (207) bzw. in einem zweiten (208) Gitterbild, in denen jede zweite Zeile sowohl in dem ersten (207) als auch in dem zweiten (208) Gitterbild Werte von 0 besitzt;

Ausführen der Interpolation unter Verwendung einer Interpolationstechnik an den Werten in den Spalten in dem ersten (207) und dem zweiten (208) Gitterbild, um die Werte für die Spalten in dem ersten (207) und dem zweiten (208) Gitterbild zu erzeugen, die Werte von 0 besitzen;

Anwenden einer horizontalen inversen Transformation auf die Zeilen des ersten (207) und des zweiten (208) Gitterbilds, um einen dritten Satz (209) von Ergebnissen zu erzeugen;

Anordnen des dritten (209) Satzes von Ergebnissen in einem dritten (210) Gitterbild, in dem jede zweite Spalte im dritten (210) Gitterbild Werte von 0 besitzt; und

Ausführen einer Interpolation unter Verwendung der Interpolationstechnik an den Werten in den Zeilen in dem dritten (210) Gitterbild, um die Werte für die Zeilen in dem dritten (210) Gitterbild zu erzeugen, die Werte von 0 besitzen.

7. Verfahren nach einem der Ansprüche 1 bis 3, wobei das Ausführen der lokalisierten adaptiven Interpolation an den Wavelet-Koeffizienten im Wavelet-Bereich umfasst:

Anwenden einer horizontalen inversen Transformation auf die Zeilen der Tiefpasskoeffizienten und der Detailkoeffizienten, um einen ersten (205) und einen zweiten (206) Satz von Ergebnissen zu erzeugen;

Anordnen des ersten (205) und des zweiten (206) Satzes von Ergebnissen in einem ersten (207) bzw. in einem zweiten (208) Gitterbild, in denen jede zweite Zeile sowohl in dem ersten (207) als auch in dem zweiten (208) Gitterbild Werte von 0 besitzt;

Ausführen der Interpolation unter Verwendung einer Interpolationstechnik an den Werten in den Zeilen in dem ersten und dem zweiten Gitterbild, um die Werte für die Zeilen in dem ersten und dem zweiten Gitterbild zu erzeugen, die Werte von 0 besitzen;

Anwenden einer vertikalen inversen Transformation auf die Spalten des ersten (207) und des zweiten (208) Gitterbilds, um einen dritten Satz (209) von Ergebnissen zu erzeugen;

Anordnen des dritten (209) Satzes von Ergebnissen in einem dritten (210) Gitterbild, in dem jede zweite Spalte im dritten (210) Gitterbild Werte von 0 besitzt; und

Ausführen einer Interpolation unter Verwendung der Interpolationstechnik an den Werten in den Spalten in dem dritten (210) Gitterbild, um die Werte für die Spalten in dem dritten (210) Gitterbild zu erzeugen, die Werte von 0 besitzen.

8. Vorrichtung für die Bildvergrößerung, die umfasst:

Mittel für eine Wavelet-Darstellung eines Bildes, wobei die Wavelet-Darstellung die Wavelet-Koeffizienten umfasst;

Mittel, um eine vorgegebene Bildverarbeitung (701) an den empfangenen Wavelet-Koeffizienten auszuführen;

Mittel, um eine inverse redundante Transformation (703) an den bildverarbeiteten Wavelet-Koeffizienten auszuführen; und

Mittel, um eine Bildvergrößerung (704) durch lokalisierte adaptive Interpolation an den invers redundant transformierten Wavelet-Koeffizienten auszuführen.

9. Vorrichtung für die Bildvergrößerung, die umfasst:

Mittel, um eine Wavelet-Darstellung (800) eines Bildes zu empfangen, wobei die Wavelet-Darstellung die Wavelet-Koeffizienten umfasst;

Mittel, um eine Bildvergrößerung (802) durch lokalisierte adaptive Interpolation an den Wavelet-Koeffizienten im Wavelet-Bereich auszuführen, und

Mittel, um eine vorgegebene Bildverarbeitung (803) an den Wavelet-Koeffizienten, an denen die lokalisierte adaptive Interpolation ausgeführt worden ist, auszuführen.

10. Vorrichtung nach Anspruch 9, die ferner Mittel zum Drucken (804) eines verarbeiteten Bildes umfasst.

11. Vorrichtung nach einem der Ansprüche 8 bis 10, die ferner Mittel umfasst, um das Aufwärtsabtasten (804) an den Wavelet-Koeffizienten unter Verwendung adaptiver Filter auszuführen.

12. Vorrichtung nach einem der Ansprüche 8 bis 10, wobei die Mittel, um die lokalisierte adaptive Interpolation auszuführen, Mittel, um die Interpolation an wenigstens einem der Wavelet-Koeffizienten auszuführen, umfassen, falls der wenigstens eine Koeffizient der Wavelet-Koeffizienten eine Bedingung erfüllt.

13. Vorrichtung nach einem der Ansprüche 8 bis 10, wobei die Mittel, um die lokalisierte adaptive Interpolation an den Wavelet-Koeffizienten im Wavelet-Bereich auszuführen, umfassen:

Mittel, um eine vertikale inverse Transformation auf die Spalten der Tiefpasskoeffizienten und der Detailkoeffizienten anzuwenden, um einen ersten (205) und einen zweiten (206) Satz von Ergebnissen zu erzeugen;

Mittel, um den ersten (205) und den zweiten (206) Satz von Ergebnissen in einem ersten (207) bzw. in einem zweiten (208) Gitterbild anzuordnen, in denen jede zweite Zeile sowohl in dem ersten (207) als auch in dem zweiten (208) Gitterbild Werte von 0 besitzt;

Mittel, um die Interpolation unter Verwendung einer Interpolationstechnik an den Werten in den Spalten in dem ersten (207) und dem zweiten (208) Gitterbild auszuführen, um die Werte für die Spalten in dem ersten (207) und dem zweiten (208) Gitterbild zu erzeugen, die Werte von 0 besitzen;

Mittel, um eine horizontale inverse Transformation auf die Zeilen des ersten (207) und des zweiten (208) Gitterbilds anzuwenden, um einen dritten Satz (209) von Ergebnissen zu erzeugen;

Mittel, um den dritten (209) Satz von Ergebnissen in einem dritten (210) Gitterbild anzuordnen, in dem jede zweite Spalte im dritten (210) Gitterbild Werte von 0 besitzt; und

Mittel, um eine Interpolation unter Verwendung der Interpolationstechnik an den Werten in den Zeilen in dem dritten (210) Gitterbild auszuführen, um die Werte für die Zeilen in dem dritten (210) Gitterbild zu erzeugen, die Werte von 0 besitzen.

14. Vorrichtung nach einem der Ansprüche 8 bis 10, wobei die Mittel, um die lokalisierte adaptive Interpolation an den Wavelet-Koeffizienten im Wavelet-Bereich auszuführen, umfassen:

Mittel, um eine horizontale inverse Transformation auf die Zeilen der Tiefpasskoeffizienten und der Detailkoeffizienten anzuwenden, um einen ersten (205) und einen zweiten (206) Satz von Ergebnissen zu erzeugen;

Mittel, um den ersten (205) und den zweiten (206) Satz von Ergebnissen in einem ersten (207) bzw. in einem zweiten (208) Gitterbild anzuordnen, in denen jede zweite Spalte sowohl in dem ersten (207) als auch in dem zweiten (208) Gitterbild Werte von 0 besitzt;

Mittel, um die Interpolation unter Verwendung einer Interpolationstechnik an den Werten in den Zeilen in dem ersten (207) und dem zweiten (208) Gitterbild auszuführen, um die Werte für die Zeilen in dem ersten (207) und dem zweiten (208) Gitterbild zu erzeugen, die Werte von 0 besitzen;

Mittel, um eine vertikale inverse Transformation auf die Spalten des ersten (207) und des zweiten (208) Gitterbilds anzuwenden, um einen dritten Satz (209) von Ergebnissen zu erzeugen;

Mittel, um den dritten (209) Satz von Ergebnissen in einem dritten (210) Gitterbild anzuordnen, in dem jede zweite Zeile im dritten (210) Gitterbild Werte von 0 besitzt; und

Mittel, um eine Interpolation unter Verwendung der Interpolationstechnik an den Werten in den Spalten in dem dritten (210) Gitterbild auszuführen, um die Werte für die Spalten in dem dritten (210) Gitterbild zu erzeugen, die Werte von 0 besitzen.

**15.** Herstellungsgegenstand, der ein oder mehrere beschreibbare Medien umfasst, auf denen ausführbare Befehle gespeichert sind, die, wenn sie durch ein System ausgeführt werden, das System veranlassen:

eine Wavelet-Darstellung eines Bildes zu empfangen, wobei die Wavelet-Darstellung die Wavelet-Koeffizienten umfasst;
eine vorgegebene Bildverarbeitung (701) an den empfangenen Wavelet-Koeffizienten auszuführen;
eine inverse redundante Transformation (703) an den bildverarbeiteten Wavelet-Koeffizienten auszuführen; und
eine Bildvergrößerung (802) durch lokalisierte adaptive Interpolation an den invers redundant transformierten Wavelet-Koeffizienten auszuführen.

**16.** Herstellungsgegenstand, der ein oder mehrere beschreibbare Medien umfasst, auf denen ausführbare Befehle gespeichert sind, die, wenn sie durch ein System ausgeführt werden, das System veranlassen:

eine Wavelet-Darstellung (800) eines Bildes zu empfangen, wobei die Wavelet-Darstellung die Wavelet-Koeffizienten umfasst;
eine Bildvergrößerung (802) durch lokalisierte adaptive Interpolation an den Wavelet-Koeffizienten im Wavelet-Bereich auszuführen, und
eine vorgegebene Bildverarbeitung (803) an den Wavelet-Koeffizienten auszuführen, an denen die lokalisierte adaptive Interpolation ausgeführt worden ist.

**17.** Herstellungsgegenstand nach einem der Ansprüche 15 bis 16, wobei das Ausführen der lokalisierten adaptiven Interpolation an den Wavelet-Koeffizienten im Wavelet-Bereich ausgeführt wird durch:

Anwenden einer vertikalen inversen Transformation auf die Spalten der Tiefpasskoeffizienten und der Detailkoeffizienten, um einen ersten (205) und einen zweiten (206) Satz von Ergebnissen zu erzeugen;
Anordnen des ersten (205) und des zweiten (206) Satzes von Ergebnissen in einem ersten (207) bzw. in einem zweiten (208) Gitterbild, in denen jede zweite Zeile sowohl in dem ersten (207) als auch in dem zweiten (208) Gitterbild Werte von 0 besitzt;
Ausführen der Interpolation unter Verwendung einer Interpolationstechnik an den Werten in den Spalten in dem ersten (207) und dem zweiten (208) Gitterbild, um die Werte für die Spalten in dem ersten (207) und dem zweiten (208) Gitterbild zu erzeugen, die Werte von 0 besitzen;
Anwenden einer horizontalen inversen Transformation auf die Zeilen des ersten (207) und des zweiten (208) Gitterbilds, um einen dritten Satz (209) von Ergebnissen zu erzeugen;
Anordnen des dritten (209) Satzes von Ergebnissen in einem dritten (210) Gitterbild, in dem jede zweite Spalte im dritten (210) Gitterbild Werte von 0 besitzt; und
Ausführen einer Interpolation unter Verwendung der Interpolationstechnik an den Werten in den Zeilen in dem dritten (210) Gitterbild, um die Werte für die Zeilen in dem dritten (210) Gitterbild zu erzeugen, die Werte von 0 besitzen.

**Revendications**

**1.** Procédé d'agrandissement d'image comprenant les étapes consistant à :

recevoir une représentation en ondelettes d'une image, la représentation en ondelettes comprenant des coefficients d'ondelettes ;
appliquer un traitement d'image prédéterminé (701) aux coefficients d'ondelettes reçus ;
appliquer une transformation redondante inverse (703) aux coefficients d'ondelettes auxquels le traitement d'image a été appliqué ; et
effectuer l'agrandissement d'image (704) en appliquant une interpolation adaptative localisée aux coefficients d'ondelettes auxquels la transformation redondante inverse a été appliquée.

**2.** Procédé d'agrandissement d'image comprenant les étapes consistant à :

recevoir une représentation en ondelettes (800) d'une image, la représentation en ondelettes comprenant des coefficients d'ondelettes ;

effectuer l'agrandissement d'image (802) en appliquant une interpolation adaptative localisée aux coefficients d'ondelettes dans le domaine des ondelettes ; et

appliquer un traitement d'image prédéterminé (803) aux coefficients d'ondelettes auxquels l'interpolation adaptative localisée a été appliquée.

**3.** Procédé selon la revendication 2, comprenant en outre l'étape d'impression (804) d'une image traitée.

**4.** Procédé selon l'une quelconque des revendications 1 à 3, comprenant en outre l'application d'un suréchantillonnage (802) en utilisant des filtres adaptatifs aux coefficients d'ondelettes.

**5.** Procédé selon l'une quelconque des revendications 1 à 3, dans lequel l'exécution d'une interpolation adaptative localisée comprend l'application de l'interpolation à au moins l'un des coefficients d'ondelettes si ledit au moins un coefficient parmi les coefficients d'ondelettes satisfait à une condition.

**6.** Procédé selon l'une quelconque des revendications 1 à 3, dans lequel l'application d'une interpolation adaptative localisée aux coefficients d'ondelettes dans le domaine des ondelettes comprend les étapes qui consistent à :

appliquer une transformation inverse verticale aux colonnes des coefficients passe-bas et des coefficients de détail pour produire des premier (205) et deuxième (206) ensembles de résultats ;

placer les premier (205) et deuxième (206) ensembles de résultats dans des première (207) et deuxième (208) images de grille, respectivement, dans lesquelles une rangée sur deux dans chacune des première (207) et deuxième (208) images de grille a des valeurs nulles ;

appliquer une interpolation en utilisant une technique d'interpolation aux valeurs des colonnes dans les première (207) et deuxième (208) images de grille pour créer des valeurs pour les colonnes des première (207) et deuxième (208) images de grille qui ont des valeurs nulles ;

appliquer une transformation inverse horizontale aux rangées des première (207) et deuxième (208) images de grille pour produire un troisième (209) ensemble de résultats ;

placer le troisième (209) ensemble de résultats dans une troisième (210) image de grille, respectivement, dans laquelle une colonne sur deux dans la troisième (210) image de grille a des valeurs nulles ; et

appliquer une interpolation en utilisant la technique d'interpolation aux valeurs des rangées dans la troisième (210) image de grille pour créer des valeurs pour les rangées dans la troisième (210) image de grille qui ont des valeurs nulles.

**7.** Procédé selon l'une quelconque des revendications 1 à 3, dans lequel l'application d'une interpolation adaptative localisée aux coefficients d'ondelettes dans le domaine des ondelettes comprend les étapes qui consistent à :

appliquer une transformation inverse horizontale aux rangées des coefficients passe-bas et des coefficients de détail pour produire des premier (205) et deuxième (206) ensembles de résultats ;

placer les premier (205) et deuxième (206) ensembles de résultats dans des première (207) et deuxième (208) images de grille, respectivement, dans lesquelles une colonne sur deux dans chacune des première (207) et deuxième (208) images de grille a des valeurs nulles ;

appliquer une interpolation en utilisant une technique d'interpolation aux valeurs des rangées dans les première et deuxième images de grille pour créer des valeurs pour les rangées dans les première et deuxième images de grille qui ont des valeurs nulles ;

appliquer une transformation inverse verticale aux colonnes des première (207) et deuxième (208) images de grille pour produire un troisième (209) ensemble de résultats ;

placer le troisième (209) ensemble de résultats dans une troisième (210) image de grille, respectivement, dans laquelle

une rangée sur deux dans la troisième (210) image de grille a des valeurs nulles ; et

appliquer une interpolation en utilisant la technique d'interpolation aux valeurs des colonnes dans la troisième (210) image de grille pour créer des valeurs pour les colonnes dans la troisième (210) image de grille qui ont des valeurs nulles.

**8.** Appareil d'agrandissement d'image comprenant :

des moyens pour obtenir une représentation en ondelettes d'une image, la représentation en ondelettes comprenant des coefficients d'ondelettes ;
des moyens pour appliquer un traitement d'image prédéterminé (701) aux coefficients d'ondelettes reçus ;
des moyens pour appliquer une transformation redondante inverse (703) aux coefficients d'ondelettes auxquels le traitement d'image a été appliqué ; et
des moyens pour effectuer l'agrandissement d'image (704) en appliquant une interpolation adaptative localisée aux coefficients d'ondelettes auxquels la transformation redondante inverse a été appliquée.

9. Appareil d'agrandissement d'image comprenant :

des moyens pour recevoir une représentation en ondelettes (800) d'une image, la représentation en ondelettes comprenant des coefficients d'ondelettes ;
des moyens pour effectuer l'agrandissement d'image (802) en appliquant une interpolation adaptative localisée aux coefficients d'ondelettes dans le domaine des ondelettes ; et
des moyens pour appliquer un traitement d'image prédéterminé (803) aux coefficients d'ondelettes auxquels l'interpolation adaptative localisée a été appliquée.

10. Appareil selon la revendication 9, comprenant en outre des moyens pour imprimer (804) une image traitée.

11. Appareil selon l'une quelconque des revendications 8 à 10, comprenant en outre des moyens pour appliquer un suréchantillonnage (802) en utilisant des filtres adaptatifs aux coefficients d'ondelettes.

12. Appareil selon l'une quelconque des revendications 8 à 10, dans lequel les moyens pour exécuter une interpolation adaptative localisée comprennent des moyens pour appliquer une interpolation à au moins l'un des coefficients d'ondelettes si ledit au moins un coefficient parmi les coefficients d'ondelettes satisfait à une condition.

13. Appareil selon l'une quelconque des revendications 8 à 10, dans lequel les moyens pour appliquer une interpolation adaptative localisée aux coefficients d'ondelettes dans le domaine des ondelettes comprennent :

des moyens pour appliquer une transformation inverse verticale aux colonnes des coefficients passe-bas et des coefficients de détail pour produire des premier (205) et deuxième (206) ensembles de résultats ;
des moyens pour placer les premier (205) et deuxième (206) ensembles de résultats dans des première (207) et deuxième (208) images de grille, respectivement, dans lesquelles une rangée sur deux dans chacune des première (207) et deuxième (208) images de grille a des valeurs nulles ;
des moyens pour appliquer une interpolation en utilisant une technique d'interpolation aux valeurs des colonnes dans les première (207) et deuxième (208) images de grille pour créer des valeurs pour les colonnes des première (207) et deuxième (208) images de grille qui ont des valeurs nulles ;
des moyens pour appliquer une transformation inverse horizontale aux rangées des première (207) et deuxième (208) images de grille pour produire un troisième (209) ensemble de résultats ;
des moyens pour placer le troisième (209) ensemble de résultats dans une troisième (210) image de grille, respectivement, dans laquelle une colonne sur deux dans la troisième (210) image de grille a des valeurs nulles ; et
des moyens pour appliquer une interpolation en utilisant la technique d'interpolation aux valeurs des rangées dans la troisième (210) image de grille pour créer des valeurs pour les rangées dans la troisième (210) image de grille qui ont des valeurs nulles.

14. Appareil selon l'une quelconque des revendications 8 à 10, dans lequel les moyens pour appliquer une interpolation adaptative localisée aux coefficients d'ondelettes dans le domaine des ondelettes comprennent :

des moyens pour appliquer une transformation inverse horizontale aux rangées des coefficients passe-bas et des coefficients de détail pour produire des premier (205) et deuxième (206) ensembles de résultats ;
des moyens pour placer les premier (205) et deuxième (206) ensembles de résultats dans des première (207) et deuxième (208) images de grille, respectivement, dans lesquelles une colonne sur deux dans chacune des première (207) et deuxième (208) images de grille a des valeurs nulles ;
des moyens pour appliquer une interpolation en utilisant une technique d'interpolation aux valeurs des rangées dans les première et deuxième images de grille pour créer des valeurs pour les rangées dans les première et deuxième images de grille qui ont des valeurs nulles ;
des moyens pour appliquer une transformation inverse verticale aux colonnes des première (207) et deuxième (208) images de grille pour produire un troisième (209) ensemble de résultats ;

des moyens pour placer le troisième (209) ensemble de résultats dans une troisième (210) image de grille, respectivement, dans laquelle une rangée sur deux dans la troisième (210) image de grille a des valeurs nulles ; et des moyens pour appliquer une interpolation en utilisant la technique d'interpolation aux valeurs des colonnes dans la troisième (210) image de grille pour créer des valeurs pour les colonnes dans la troisième (210) image de grille qui ont des valeurs nulles.

15. Article de fabrication comprenant un ou plusieurs supports enregistrables sur lesquels une instruction exécutable est mémorisée, laquelle, lorsqu'elle est exécutée par un système, amène le système à :

recevoir une représentation en ondelettes d'une image, la représentation en ondelettes comprenant des coefficients d'ondelettes ;
appliquer un traitement d'image prédéterminé (701) aux coefficients d'ondelettes reçus ;
appliquer une transformation redondante inverse (703) aux coefficients d'ondelettes auxquels le traitement d'image a été appliqué ; et
effectuer l'agrandissement d'image (802) en appliquant une interpolation adaptative localisée aux coefficients d'ondelettes auxquels la transformation redondante inverse a été appliquée.

16. Article de fabrication comprenant un ou plusieurs supports enregistrables sur lesquels une instruction exécutable est mémorisée, laquelle, lorsqu'elle est exécutée par un système, amène le système à :

recevoir une représentation en ondelettes (800) d'une image, la représentation en ondelettes comprenant des coefficients d'ondelettes ;
effectuer l'agrandissement d'image (802) en appliquant une interpolation adaptative localisée aux coefficients d'ondelettes dans le domaine des ondelettes ; et
appliquer un traitement d'image prédéterminé (803) aux coefficients d'ondelettes auxquels l'interpolation adaptative localisée a été appliquée.

17. Article de fabrication selon l'une quelconque des revendications 15 et 16, dans lequel l'application d'une interpolation adaptative localisée aux coefficients d'ondelettes dans le domaine des ondelettes consiste à :

appliquer une transformation inverse verticale aux colonnes des coefficients passe-bas et des coefficients de détail pour produire des premier (205) et deuxième (206) ensembles de résultats ;
placer les premier (205) et deuxième (206) ensembles de résultats dans des première (207) et deuxième (208) images de grille, respectivement, dans lesquelles une rangée sur deux dans chacune des première (207) et deuxième (208) images de grille a des valeurs nulles ;
appliquer une interpolation en utilisant une technique d'interpolation aux valeurs des colonnes dans les première (207) et deuxième (208) images de grille pour créer des valeurs pour les colonnes des première (207) et deuxième (208) images de grille qui ont des valeurs nulles ;
appliquer une transformation inverse horizontale aux rangées des première (207) et deuxième (208) images de grille pour produire un troisième (209) ensemble de résultats ;
placer le troisième (209) ensemble de résultats dans une troisième (210) image de grille, respectivement, dans laquelle une colonne sur deux dans la troisième (210) image de grille a des valeurs nulles ; et
appliquer une interpolation en utilisant la technique d'interpolation aux valeurs des rangées dans la troisième (210) image de grille pour créer des valeurs pour les rangées dans la troisième (210) image de grille qui ont des valeurs nulles.

# FIG.1

EP 1 610 267 B1

# FIG.2

# FIG.3A

RECEIVE AN IMAGE GIVEN IN WAVELET COEFFICIENTS ⌐301

PERFORM A FIRST VERTICAL INVERSE WAVELET TRANSFORM ON COLUMNS OF A FIRST COEFFICIENT MATRIX OF THE IMAGE AND COLUMNS OF A SECOND COEFFICIENT MATRIX OF THE IMAGE ⌐302

PERFORM A SECOND VERTICAL INVERSE WAVELET TRANSFORM ON COLUMNS OF A THIRD COEFFICIENT MATRIX OF THE IMAGE AND COLUMNS OF A FOURTH COEFFICIENT MATRIX OF THE IMAGE ⌐303

FOR EACH COLUMN IN A RESULT OF THE FIRST VERTICAL INVERSE WAVELET TRANSFORM, SET A CORRESPONDING EVEN—NUMBERED COLUMN IN A FIRST VERTICALLY COARSER GRID IMAGE EQUAL TO THE COLUMN IN THE RESULT OF THE FIRST VERTICAL INVERSE WAVELET TRANSFORM ⌐304

FOR EACH COLUMN IN A RESULT OF THE SECOND VERTICAL INVERSE WAVELET TRANSFORM, SET A CORRESPONDING EVEN— NUMBERED COLUMN IN A SECOND VERTICALLY COARSER GRID IMAGE EQUAL TO THE COLUMN IN THE RESULT OF THE SECOND VERTICAL WAVELET TRANSFORM ⌐305

FOR EACH COLUMN AND EACH ROW IN A FIFTH COEFFICIENT MATRIX, SET AN ELEMENT IN THE COLUMN AND ROW OF THE FIFTH COEFFICIENT MATRIX EQUAL TO A SUM OF A FIRST ADDEND AND A SECOND ADDEND, WHEREIN THE FIRST ADDEND IS AN ELEMENT IN A COLUMN AND A ROW IN THE SECOND COEFFICIENT MATRIX, THE COLUMN AND ROW IN THE SECOND COEFFICIENT MATRIX CORRESPONDING TO THE COLUMN AND THE ROW IN THE FIFTH COEFFICIENT MATRIX, AND WHEREIN THE SECOND ADDEND IS AN ELEMENT IN A COLUMN AND ROW IN THE FOURTH COEFFICIENT MATRTX, THE COLUMN AND THE ROW IN THE FOURTH COEFFICIENT MATRIX CORRESPONDING TO THE COLUMN AND THE ROW IN THE FIFTH COEFFICIENT MATRIX ⌐306

A

# FIG.3B

A

**307**

FOR EACH ROW OF EACH OFF—NUMBERED COLUMN IN THE FIRST VERTICALLY COARSER GRID IMAGE, SET AN ELEMENT IN THE ROW OF THE ODD—NUMBERED COLUMN EQUAL TO A SUM OF A FIRST ADDEND AND A SECOND ADDEND, WHEREIN THE FIRST ADDEND IS A PRODUCT OF A FIRST PARAMETER AND AN ELEMENT IN A SAME ROW OF AN EVEN—NUMBERED COLUMN LEFT OF THE ODD—NUMBERED COLUMN, AND WHEREIN THE SECOND ADDEND IS A PRODUCT OF A DIFFERENCE AND AN ELEMENT IN A SAME ROW OF AN EVEN—NUMBERED COLUMN RIGHT OF THE ODD—NUMBERED COLUMN, WHEREIN THE DIFFERENCE IS EQUAL TO ONE MINUS THE FIRST PARAMETER

**308**

FOR EACH ROW OF EACH ODD—NUMBERED COLUMN IN THE SECOND VERTICALLY COARSER IMAGE, SET AN ELEMENT IN THE ROW OF THE ODD—NUMBERED COLUMN EQUAL TO A SUM OF A FIRST ADDEND AND A SECOND ADDEND, WHEREIN THE FIRST ADDEND IS A PRODUCT OF THE FIRST PARAMETER AND AN ELEMENT IN A SAME ROW OF AN EVEN—NUMBERED COLUMN LEFT OF THE ODD— NUMBERED COLUMN, AND WHEREIN THE SECOND ADDEND IS A PRODUCT OF A DIFFERENCE AND AN ELEMENT IN A SAME ROW OF AN EVEN—NUMBERED COLUMN RIGHT OF THE ODD—NUMBERED COLUMN, WHEREIN THE DIFFERENCE IS EQUAL TO ONE MINUS THE FIRST PARAMETER

**309**

PERFORM A HORIZONTAL INVERSE WAVELET TRANSFORM ON ROWS OF THE FIRST VERTICALLY COARSER GRID IMAGE AND ROWS OF THE SECOND VERTICALLY COARSER GRID IMAGE

**310**

FOR EACH ROW IN A RESULT OF THE HORIZONTAL INVERSE WAVELET TRANSFORM, SET A CORRESPONDING EVEN—NUMBERED ROW IN A HORIZONTALLY COARSER GRID IMAGE EQUAL TO THE ROW IN THE RESULT OF THE HORIZONTAL INVERSE WAVELET TRANSFORM

B

# FIG.3C

B

311

FOR EACH EVEN—NUMBERED COLUMN OF EACH ODD—NUMBERED ROW IN THE HORIZONTALLY COARSER GRID IMAGE, SET AN ELEMENT IN THE EVEN—NUMBERED COLUMN OF THE ODD-NUMBERED ROW EQUAL TO A SUM OF A FIRST ADDEND AND A SECOND ADDEND, WHEREIN THE FIRST ADDEND IS A PRODUCT OF A THIRD PARAMETER AND AN ELEMENT IN A SAME EVEN-NUMBERED COLUMN OF AN EVEN—NUMBERED ROW ABOVE THE ODD—NUMBERED ROW, AND WHEREIN THE SECOND ADDEND IS A PRODUCT OF A DIFFERENCE AND AN ELEMENT IN A SAME EVEN-NUMBERED COLUMN OF AN EVEN—NUMBERED ROW BELOW THE ODD-NUMBERED ROW, WHEREIN THE DIFFERENCE IS EQUAL TO ONE MINUS THE THIRD PARAMETER

312

FOR EACH ODD—NUMBERED COLUMN OF EACH ODD—NUMBERED ROW IN THE HORIZONTALLY COARSER GRID IMAGE, SET AN ELEMENT IN THE ODD—NUMBERED COLUMN OF THE ODD—NUMBERED ROW EQUAL TO A SUM OF A FIRST ADDEND AND A SECOND ADDEND, WHEREIN THE FIRST ADDEND IS A PRODUCT OF THE THIRD PARAMETER AND AN ELEMENT IN A SAME ODD—NUMBERED COLUMN OF AN EVEN—NUMBERED ROW ABOVE THE ODD—NUMBERED ROW, AND WHEREIN THE SECOND ADDEND IS A PRODUCT OF A DIFFERENCE AND AN ELEMENT IN A SAME ODD—NUMBERED COLUMN OF AN EVEN—NUMBERED ROW BELOW THE ODD—NUMBERED ROW, WHEREIN THE DIFFERENCE IS EQUAL TO ONE MINUS THE THIRD PARAMETER

313

CLIP A RESULTING IMAGE BACK TO A RANGE

314

SET EACH ELEMENT IN THE RESULTING IMAGE HAVING A VALUE BELOW THE RANGE TO A LOWEST VALUE IN THE RANGE AND SET EACH ELEMENT IN THE RESULTING IMAGE HAVING A VALUE ABOVE THE RANGE TO A HIGHEST VALUE IN THE RANGE

# FIG.4

# FIG.5

~501

~502

# FIG.6

```
┌─────────────────┐
│  RECEIVE AN     │
│  IMAGE HAVING A │  ～601
│  PERFECT STEP   │
│  EDGE           │
└─────────────────┘
         │
         ▼
┌─────────────────┐
│  INTERPOLATE    │
│  THE PERFECT    │
│  STEP EDGE      │  ～602
│  EXACTLY WHILE  │
│  ENLARGING THE  │
│  IMAGE          │
└─────────────────┘
```

# FIG.7

```
IMAGE ──→ ┌─701──────────┐    ┌─702──────────┐    ┌─703──────────┐    ┌─704──────────┐
          │   FORWARD    │    │NOISE REMOVAL │    │   INVERSE    │    │              │
          │  REDUNDANT   │──→ │    TEXT      │──→ │  REDUNDANT   │──→ │  ENLARGER    │
          │   WAVELET    │    │ SHARPENING,  │    │   WAVELET    │    │              │
          │  TRANSFORM   │    │  HALFTONE    │    │  TRANSFORM   │    │              │
          │  (M LEVELS)  │    │  SMOOTHING   │    │ (M-1 LEVELS) │    │              │
          └──────────────┘    └──────────────┘    └──────────────┘    └──────────────┘
```

# FIG.8

EP 1 610 267 B1

```
┌─────────────┐     ┌─────────────┐     ┌─────────────┐     ┌─────────────┐     ┌─────────────┐
│    ┌800     │     │    ┌801     │     │    ┌802     │     │    ┌803     │     │    ┌804     │
│  RECEIVED   │     │             │     │             │     │ PROCESSING  │     │             │
│DIGITAL IMAGE│     │  ONE LEVEL  │     │             │     │  (GAMMA     │     │             │
│AT A SPECIFIC│ ──> │  FORWARD    │ ──> │  ENLARGER   │ ──> │ CORRECTION, │ ──> │   OUTPUT    │
│    DPI      │     │ REDUNDANT   │     │             │     │ HALFTONING) │     │             │
│ RESOLUTION R│     │  WAVELET    │     │             │     │ FOR PRINTING│     │             │
│             │     │             │     │             │     │  AT 2R DPI  │     │             │
└─────────────┘     └─────────────┘     └─────────────┘     └─────────────┘     └─────────────┘
```

# FIG.9

900

# FIG.10

DECOMPOSE IMAGE INTO MULTIPLE
DECOMPOSITION LEVELS
1001

MODIFY COEFFICIENTS BY SCALING AT
LEAST TWO LEVELS DIFFERENTLY
1002

INVERSE TRANSFORM COEFFICIENTS
1003

# FIG.11

```
┌─────────────────────────────────┐
│   DECOMPOSE IMAGE DATA INTO      │ ⌇  1101
│        MULTIPLE LEVELS           │
└─────────────────────────────────┘
                 │
                 ▼
┌─────────────────────────────────┐
│      CLASSIFY COEFFICIENTS       │ ⌇  1102
│           (OPTIONAL)             │
└─────────────────────────────────┘
                 │
                 ▼
┌─────────────────────────────────┐
│       PERFORM DENOISING ON       │ ⌇  1103
│          COEFFICIENTS            │
└─────────────────────────────────┘
                 │
                 ▼
┌─────────────────────────────────┐
│        SCALE COEFFICIENTS        │ ⌇  1104
└─────────────────────────────────┘
                 │
                 ▼
┌─────────────────────────────────┐
│     RENORMALIZE COEFFICIENTS     │ ⌇  1105
└─────────────────────────────────┘
                 │
                 ▼
┌─────────────────────────────────┐
│  INVERSE TRANSFORM COEFFICIENTS  │ ⌇  1106
└─────────────────────────────────┘
```

# FIG.12

EP 1 610 267 B1

# FIG.13

EP 1 610 267 B1

# FIG.14

Input parameters:wavelet system, level L of decomposition, sharpening/smoothing parameter $\alpha$, denoising technique (thresholds) — 1401

↓

Lookup smoothness value $\gamma$ for chosen wavelet system — 1402

↓

Compute renormalization factor R — 503

↓

1st level wavelet transform — 504

↓

If Donoho–Johnstone treshold is used for denoising compute standard deviation of wavelet coefficiens $\sigma$ and set threshold to
$$\sigma \sqrt{2\log N}$$
where N is maximum of the size of rows and columns of the input data. — 506

↓

2nd level wavelet transform — 507z

↓

L–th level wavelet transform — 507L

↓

Perform thresholding (denoising) and rescaling (sharpening or smoothing) by multipling wavelet coefficints at level j with $2^{j\alpha}/R$ — 508

↓

L levels inverse transform — 509

# FIG.15A

# FIG.15B

# FIG.15C

level 1     level 2     — — — — — — — — — — —     level L

EP 1 610 267 B1

# FIG.15D

level L                    level L-1    — — — — — — — —    level 1

$x^*$

# FIG.16A

# FIG.16B

# FIG.16C

# FIG.16D

level L    level L-1  — — — — — — — — — — — — —    level 1

2L times

# FIG.17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5717789 A
- US 46754499 A
- US 467544 A
- US 7068851 B

### Non-patent literature cited in the description

- **Allebach, J. ; Wong, P.W.** Edge-directed interpolation. *Proceedings of ICIP'98,* 1998, 707-710
- **Li, X. ; Orchard, M.** new edge directed interpolation. *Proceedings of ICIP' 2000,* 2000
- **Carrato, S. ; Ramponi, G. ; Marsi. S.** A simple edge-sensitive image interpolation filter. *Proceedings of ICIP'96,* 1996, 711-714
- **Carey, W.K. ; Chuang, D.B. ; Hemami, S.S.** Regularity-Preserving Image Interpolation. *Trans. Image Processing,* 1999, vol. 8 (9), 1293-1297
- **Chang, S.G. ; Cvetkovic, Z. ; Vetterli, M.** Resolution enhancement of images using wavelet transform extrema extrapolation. *Proceedings of ICASSP'95,* 1995, 2379-2382
- **Donoho, D.L.** Denoising by Soft-Thresholding. *IEEE Trans. Inform. Theory,* 1995, vol. 41 (3), 613-627
- **G. Straug ; T. Nguyen.** Wavelets and Filter Banks. Wellesley-Cambridge Press, 1996
- **Y. Meyer.** Wavelets and Operators. Cambridge University Press, 1992
- Ten Lectures on Wavelets. *SIAM,* 1992